(19) Europäisches Patentamt
European Patent Office
Office européen des brevets

(11) **EP 4 404 541 A1**

(12) **EUROPEAN PATENT APPLICATION**
published in accordance with Art. 153(4) EPC

(43) Date of publication:
**24.07.2024 Bulletin 2024/30**

(21) Application number: **22883884.3**

(22) Date of filing: **14.10.2022**

(51) International Patent Classification (IPC):
*H04M 1/02* $^{(2006.01)}$     *G06F 1/16* $^{(2006.01)}$

(52) Cooperative Patent Classification (CPC):
**G06F 1/16; H04M 1/02**

(86) International application number:
**PCT/KR2022/015560**

(87) International publication number:
**WO 2023/068661 (27.04.2023 Gazette 2023/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.10.2021 KR 20210140575**

(71) Applicant: **Samsung Electronics Co., Ltd.
Suwon-si, Gyeonggi-do 16677 (KR)**

(72) Inventors:
• **KIM, Sukdong
Suwon-si, Gyeonggi-do 16677 (KR)**

• **KWAK, Myunghoon
Suwon-si, Gyeonggi-do 16677 (KR)**
• **KIM, Youngrog
Suwon-si, Gyeonggi-do 16677 (KR)**
• **LEE, Changhan
Suwon-si, Gyeonggi-do 16677 (KR)**
• **HONG, Sungmin
Suwon-si, Gyeonggi-do 16677 (KR)**
• **KIM, Yangwook
Suwon-si, Gyeonggi-do 16677 (KR)**
• **PARK, Jihea
Suwon-si, Gyeonggi-do 16677 (KR)**

(74) Representative: **HGF
HGF Limited
1 City Walk
Leeds LS11 9DX (GB)**

(54) **ELECTRONIC DEVICE COMPRISING FLEXIBLE DISPLAY AND OPERATION METHOD THEREOF**

(57)     An electronic device may be provided according to various embodiments, the electronic device comprising: a housing; a flexible display of which at least a portion may be slid out to the outside of the housing; a motor; and at least one processor. The at least one processor is configured so as to: identify an event for sliding out the flexible display; on the basis of the identified event, identify the value of a parameter associated with processing for displaying content on the flexible display; if the identified value is a first value, control the rotational velocity of the motor so as to be a first rotational velocity; and if the identified value is a second value greater than the first value, control the rotational velocity of the motor so as to be a second rotational velocity higher than the first rotational velocity. Other various embodiments are possible.

Exposed area
Slid-in area

FIG. 2

EP 4 404 541 A1

**Description**

[Technical Field]

Various embodiments of the disclosure relate to an electronic device including a flexible display and an operation method thereof.

[Background Art]

As the demand for mobile communication increases and on the other hand, as the degree of integration of electronic devices increases, the portability of electronic devices such as mobile communication terminals improves, and convenience in using multimedia functions and the like may be enhanced. For example, as traditional mechanical (button-type) keypads are replaced with displays integrated with a touch screen function, electronic devices may be miniaturized while maintaining the function as input devices. For example, the portability of the electronic device may be improved by removing the mechanical keypad from the electronic device. In another embodiment, if the display is expanded by the size of a region from which the mechanical keypad is removed, the electronic device including the touch screen function may provide a larger screen than the electronic device including the mechanical keypad even if it has the same size and weight as the electronic device including the mechanical keypad.

It may be more convenient to use an electronic device that outputs a larger screen for surfing the web or using multimedia functions. Although a larger display may be mounted to the electronic device in order to obtain a larger screen output, there may be limitations in expanding the size of the display in consideration of the portability of the electronic device. In an embodiment, a display using an organic light-emitting diode may provide a larger screen while ensuring portability of the electronic device. For example, displays using (or electronic devices equipped with) organic light-emitting diodes may implement stable operation even when manufactured to be quite thin, and may be mounted to electronic devices in a foldable, bendable, or rollable form.

[Detailed Description of the Invention]

[Technical Problem]

The electronic device may control a motor such that a display of the electronic device reciprocates. According to the reciprocation of the display, the region of the display received inside the electronic device may be exposed to the outside, or the region of the display exposed to the outside of the electronic device may be received inside the electronic device so that the size of the region of the display exposed to the outside may be variable. The electronic device, according to the movement of the display, may produce content having the size corresponding to the variable size of the region exposed to the outside of the display at a cycle corresponding to the scan rate currently configured in the electronic device and send the produced content to the moving display. At this time, if the system load is high, the operation of producing the content (or processing the content) may be delayed, and thus the content may be provided to the display at a scan rate lower than the configured scan rate. That is, the display quality of content may deteriorate while controlling the motor.

According to various embodiments, an electronic device and an operation method thereof may increase the rotational velocity of a motor in the case where a value of a parameter (e.g., system load) that delays the display of content increases, thereby ensuring the display quality of content on the display.

[Technical Solution]

According to various embodiments, there may be provided an electronic device that may include a housing including a first housing and a second housing configured to slide relative to the first housing, a flexible display configured to slide out, in at least a portion, to an outside of the housing, a motor configured to provide driving force to drive the second housing, memory configured to store executable instructions, and at least one processor configured to access the memory and execute the instructions, wherein the at least one processor may be configured to identify an event for sliding-out of the flexible display, identify a value of a parameter associated with a process of displaying content on the flexible display, based on the identified event, control a rotational velocity of the motor at a first rotational velocity when the identified value is a first value, and control the rotational velocity of the motor at a second rotational velocity higher than the first rotational velocity when the identified value is a second value greater than the first value.

According to various embodiments, there may be provided an operation method of an electronic device that may include identifying an event for sliding-out of a flexible display of the electronic device, identifying a value of a parameter associated with a process of displaying content on the flexible display, based on the identified event, controlling a rotational velocity of the motor at a first rotational velocity when the identified value is a first value, and controlling the rotational velocity of the motor at a second rotational velocity higher than the first rotational velocity when the identified value is a second value greater than the first value.

According to various embodiments, there may be provided an electronic device that may include a housing including a first housing and a second housing configured to slide relative to the first housing, a flexible display configured to slide out, in at least a portion, to the outside of the housing, motor RAM configured to provide driving force to drive the second housing, and at least one processor, wherein the at least one processor may be configured identify usage of the RAM, control the motor at a first rotational velocity when a value of the identified usage of the RAM is a first value, and control the motor at a second rotational velocity greater than the first rotational velocity when a value of the identified usage of the RAM is a second value greater than the first value.

The technical solutions for the problems according to various embodiments are not limited to the above-mentioned solutions, and the solutions not mentioned would be clearly understood by those skilled in the art to which the disclosure pertains from this specification and the attached drawings.

[Advantageous Effects]

According to various embodiments, it is possible to provide an electronic device capable of ensuring the display quality of content on the display by increasing the rotational velocity of a motor in the case where a value of a parameter (e.g., system load) that delays the display of content increases, and an operation method thereof.

[Brief Description of Drawings]

FIG. 1 is a block diagram of an electronic device in a network environment according to various embodiments.
FIG. 2 is a diagram illustrating an example of an electronic device in which the shape of the electronic device associated with a display is variable according to various embodiments.
FIG. 3A is a diagram illustrating examples of an electronic device including a structure that enables a display (e.g., a flexible display) to expand and/or contract in the left/right direction according to various embodiments.
FIG. 3B is a diagram illustrating an example of an electronic device including a structure that enables a display (e.g., a flexible display) to expand and/or contract in the upward/downward direction according to various embodiments.
FIG. 3C is a diagram illustrating an example of an electronic device including a plurality of structures that enable a display (e.g., a flexible display) to expand and/or contract according to various embodiments.
FIG. 3D is a diagram illustrating an example of an electronic device including a structure that enables at least a portion of a display (e.g., a flexible display) to reciprocate clockwise/counterclockwise according to various embodiments.
FIG. 4A is a diagram illustrating an electronic device in the state in which a portion (e.g., a portion A2 of a second region) of a flexible display is received inside a second structure according to various embodiments disclosed in this document.
FIG. 4B is a diagram illustrating an electronic device in the state in which most of the flexible display is visually exposed to the outside of the second structure according to various embodiments disclosed in this document.
FIG. 4C is an exploded perspective view of an electronic device (e.g., the electronic device in FIG. 4A or FIG. 4B) according to various embodiments disclosed in this document.
FIG. 5 is a diagram illustrating the configuration of an electronic device according to various embodiments.
FIG. 6A is a diagram illustrating an example of a processing operation to display content on a display of an electronic device according to various embodiments.
FIG. 6B is a diagram illustrating an example of an operation of identifying a value of a parameter associated with processing of displaying content in an electronic device according to various embodiments.
FIG. 7 is a flowchart illustrating an example of the operation of an electronic device according to various embodiments.
FIG. 8 is a diagram illustrating an example in which the movement speed of the display increases when the usage (or usage rate) of a processor and/or memory increases according to various embodiments.
FIG. 9 is a flowchart illustrating an example of the operation of an electronic device according to various embodiments.
FIG. 10 is a diagram illustrating an example of an operation of determining a rotational velocity corresponding to the usage (or usage rate) of a processor and/or memory of an electronic device according to various embodiments.
FIG. 11 is a flowchart illustrating an example of the operation of an electronic device according to various embodiments.
FIG. 12 is a flowchart illustrating an example of the operation of an electronic device according to various embodiments.

FIG. 13 is a flowchart illustrating an example of the operation of an electronic device according to various embodiments.

FIG. 14 is a diagram illustrating an example of an operation of controlling a motor and displaying content for each value of a parameter associated with processing content in an electronic device according to various embodiments.

FIG. 15 is a flowchart illustrating an example of the operation of an electronic device according to various embodiments.

FIG. 16 is a diagram illustrating an example of an operation of updating prestored information in an electronic device according to various embodiments.

FIG. 17 is a flowchart illustrating an example of the operation of an electronic device according to various embodiments.

FIG. 18A is a diagram illustrating an example of an operation of providing information on values of parameters associated with processing for displaying content and optimizing the values in an electronic device according to various embodiments.

FIG. 18B is a diagram illustrating another example of an operation of providing information on values of parameters associated with processing for displaying content and optimizing the values in an electronic device according to various embodiments.


[Mode for Carrying out the Invention]

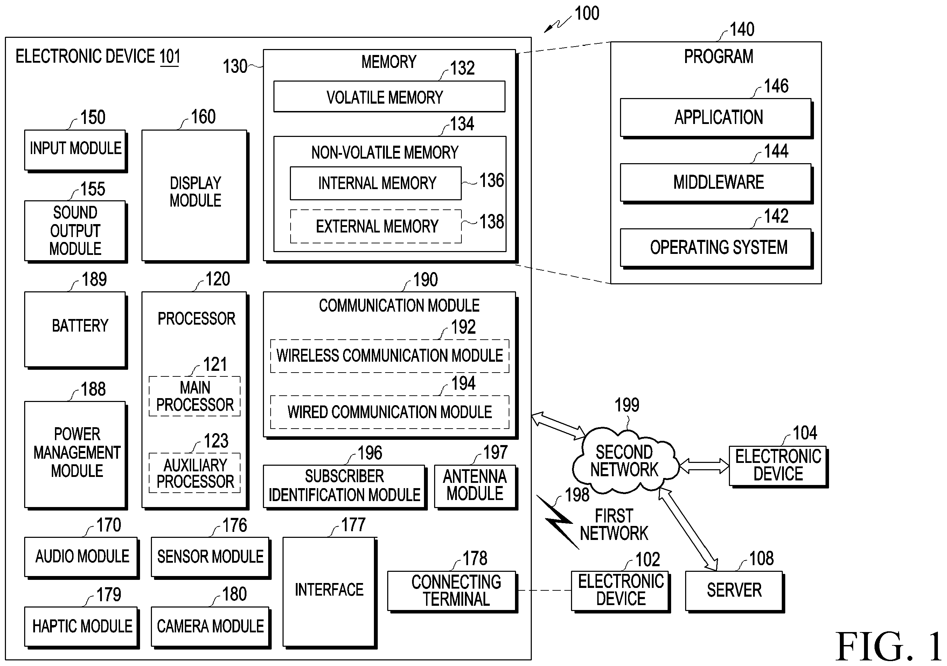

FIG. 1 is a block diagram illustrating an electronic device 101 in a network environment 100 according to embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, an electronic device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Hereinafter, various embodiments of an electronic device 200 (e.g., the electronic device 101 in FIG. 1) disclosed in this document will be described.

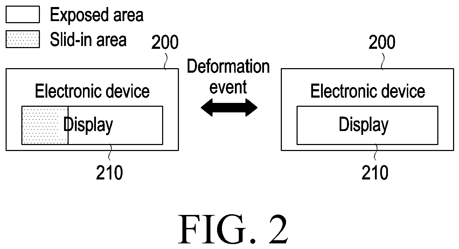

FIG. 2 is a diagram illustrating an example of an electronic device 200 in which the shape of the electronic device 200 associated with a display 210 is variable according to various embodiments.

According to various embodiments, referring to FIG. 2, the shape of the electronic device 200 associated with at least one display 210 provided in the electronic device 200 may be changed. The change in the shape associated with the display 210 may indicate a change in the size of the region of the display 210 exposed to the outside of the electronic device 200 and in the size of the region received (or disposed) inside the electronic device 200. For example, the region of the display 210 exposed to the outside of the electronic device 101 may be expanded (or increased), and/or the region of the display 210 exposed to the outside may be contracted (or reduced). Alternatively, the region of the display 210 received inside the electronic device 200 may be increased, and/or the region of the display 210 received inside the electronic device 200 may be reduced. The region exposed to the outside of the electronic device may be defined as a region of the display 210 exposed to the outside of a housing (or cover) that forms the exterior of the electronic device 200 (or encloses the interior of the electronic device 200), and the region inserted inside (or received inside) the electronic device may be defined as a region disposed in the inner space of the electronic device 200 formed by the housing (or cover). The housing (or cover) that forms the exterior of the electronic device 200 may be implemented as a single housing or a combination of multiple housings.

According to various embodiments, the electronic device 200 may include a structure for changing the shape of the electronic device 200 associated with at least one display 210. The structure may be understood to encompass a structure in a specific shape implemented (or provided) in the electronic device 200 (e.g., a housing) in which an entrance through which the region received inside the display 210 slides out to the outside and/or through which the region exposed to the outside slides into the electronic device, and an internal structure including the shape (e.g., a curvature formed in a portion in contact with the display 210) for guiding (or supporting) the display 210, members (e.g., rollers), and electronic components (e.g., a motor). For example, the structure may be implemented to enable the display 210 to linearly reciprocate in various directions (e.g., the left/right direction, the upward/downward direction, or the diagonal directions) on a two-dimensional plane and/or to reciprocate in various rotation directions (e.g., the clockwise/counterclockwise directions). In addition, for example, the structure may be implemented such that that the region of the display 210, which is received inside the electronic device 200, is able to be wound multiple times.

According to various embodiments, if an event for shape change occurs, the electronic device 200 may change the shape of the electronic device 200 associated with the display 210. The event for shape change may include the case where physical force is applied by the user to pull out the display 210 (e.g., a portion of the display 210 is pulled in a specific direction) and/or the case of identifying inputs for driving electronic components (e.g., a motor) to draw out the display 210.

Meanwhile, although the electronic device 200 is shown as including one display 210, the electronic device 200 may include a plurality of displays, and the shape of the electronic device 200 associated with at least some of the plurality of displays may be changed.

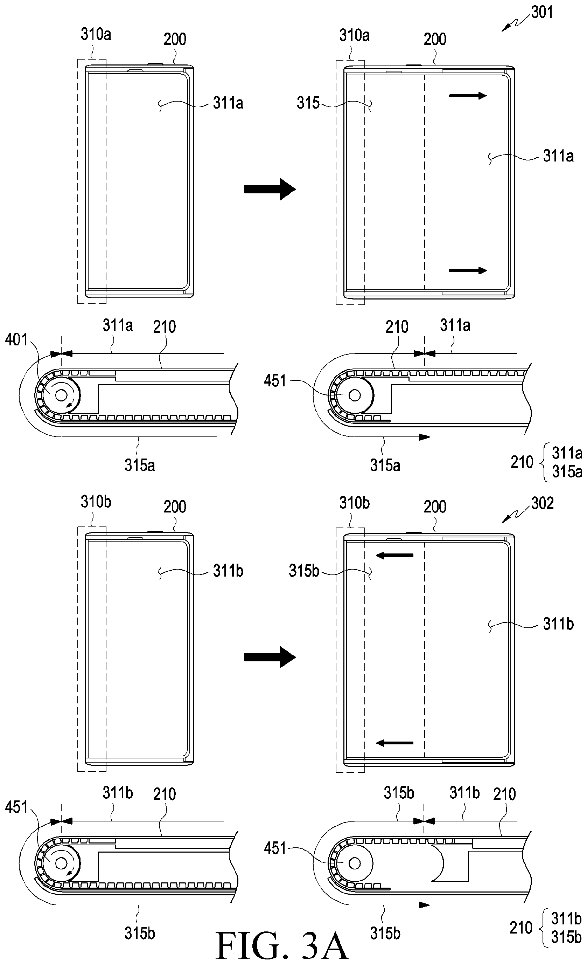

Hereinafter, examples of the electronic device 200 including a structure that enables the display 210 described in FIG. 2 to reciprocate will be described with reference to FIGS. 3A to 3D. Meanwhile, the disclosure is not limited to the examples of the electronic device 200 described below, and various embodiments may be applied to electronic devices 200 including various structures in which the size of the region exposed to the outside of the display 210 and/or the size of the region received inside the same are variable.

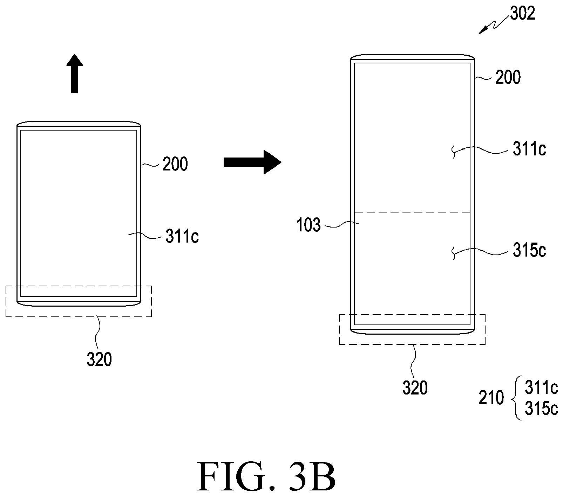

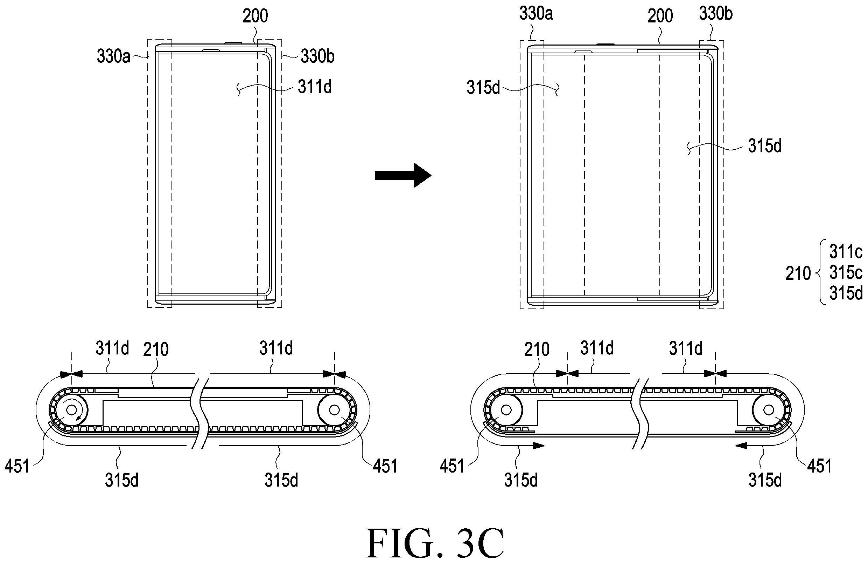

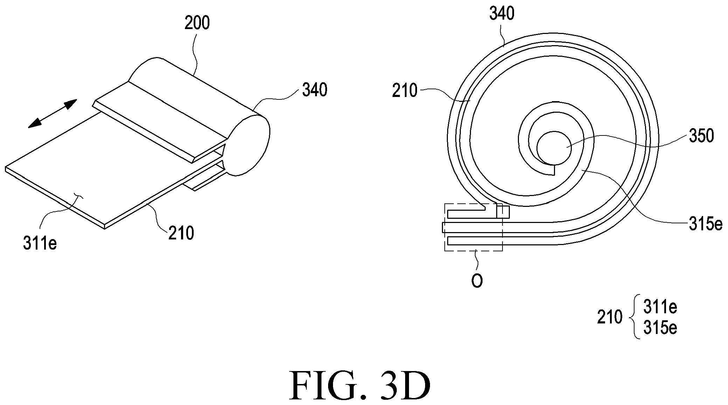

FIG. 3A is a diagram illustrating examples of an electronic device 200 including a structure that enables a display 210 (e.g., a flexible display) to expand and/or contract in the left/right direction according to various embodiments. FIG. 3B is a diagram illustrating an example of an electronic device 200 including a structure that enables a display 210 (e.g., a flexible display) to expand and/or contract in the upward/downward direction according to various embodiments. FIG. 3C is a diagram illustrating an example of an electronic device 200 including a plurality of structures that enable a display 210 (e.g., a flexible display) to expand and/or contract according to various embodiments. FIG. 3D is a diagram illustrating an example of an electronic device 200 including a structure that enables at least a portion of a display 210 (e.g., a flexible display) to reciprocate clockwise/counterclockwise according to various embodiments.

According to various embodiments, as shown in FIGS. 3A and 3B, the electronic device 200 may include a structure that enables the size of the region exposed to the outside of the flexible display 210 to be expanded or reduced in the left/right direction or in the upward/downward direction. For example, the electronic device 200 may include a display 210 (e.g., a flexible display), a structure (or housing) (e.g., a first structure 401 to be described later) having some regions 311a, 311b, and 311c of the display 210 disposed thereon and implemented in the electronic device 200 to reciprocate, and a movement member (e.g., a roller 451 to be described later). The electronic device 200 may include an entrance structure that is provided in a portion (e.g., the left portion 310a or 310b, the right portion (not shown), the upper portion (not shown), or the lower portion 320) of the electronic device 200 such that the remaining portion 315a, 315b, or 315c located inside the electronic device 200 of the flexible display 210 slides out or slides in after sliding out through the same.

In an embodiment, referring to 301 in FIG. 3A, the electronic device 200 may be implemented to include a structure in which the flexible display 210 moves along with a structure (e.g., the first structure 401 to be described later) so that the size of the region of the flexible display 210 exposed to the outside may be expanded and/or reduced in the left/right direction. For example, referring to 301 in FIG. 3A, as the structure (e.g., the first structure 401 to be described later) reciprocates (e.g., reciprocates in the left/right direction), based on the rotation of a roller 451, a portion of the flexible display 210 disposed on the structure may move along therewith so that a portion 315a of the flexible display 210 may slide out and/or slide in through the entrance formed in a portion of the electronic device 200 (e.g., the left portion 310a or right portion (not shown) of the electronic device 200). As will be described later, the rotation of the roller 451 may be performed by a movement device (e.g., a motor or shape memory alloy). The direction of movement of the structure or display 210 may be defined as an extension direction or a contraction direction. For example, as the structure (or the flexible display 210) slides out in a first direction (e.g., to the right), if the size of the region of the flexible display 210, which is exposed to the outside of the electronic device 200, is expanded (or increased), the first direction may be defined as an extension direction. In addition, for example, as the flexible display 210 slides in, the size of the region of the flexible display 210 received inside the electronic device 200 may be reduced (or contracted). For example, the extension direction shown in 301 of FIG. 3A may be the right direction.

In an embodiment, referring to 302 in FIG. 3A, the electronic device 200 may be implemented to include a structure in which the size of the region of the flexible display 210 exposed to the outside is expanded and/or reduced in the left/right direction as the structure (e.g., the first structure 401 to be described later) moves. For example, referring to 302 in FIG. 3A, as the structure (e.g., the first structure 401 to be described later) reciprocates (e.g., reciprocates to the left and right), based on the rotation of the roller 451, a portion 315a of the flexible display 210 may slide out and/or slide in through the entrance formed in a portion of the electronic device 200 (e.g., the left portion 310a or right portion (not shown) of the electronic device 200). The direction from a fixed portion of the flexible display 210 (e.g., a portion of the region 311b exposed to the outside) to the portion where the region of the flexible display 210 is expanded (e.g., the left portion 310b) may be defined as an extension direction. On the other hand, the direction from the portion where the region of the flexible display 210 is reduced (e.g., the left portion 310b) to the fixed portion of the flexible display 210 (e.g., a portion of the region 311b exposed to the outside) may be defined as a contraction direction. For example, the extension direction shown in 302 of FIG. 3A may be the left direction.

In an embodiment, referring to FIG. 3B, the electronic device 200 may be implemented to include a structure in which the size of the region of the flexible display 210 exposed to the outside is expanded and/or reduced in the upward/downward direction as the flexible display 210 moves along with the structure (e.g., the first structure 401 to be described later). As the structure (e.g., the first structure 401 to be described later) reciprocates (e.g., reciprocates in the upward/downward direction), based on the rotation of a roller 451, a portion of the flexible display 210 disposed on the structure may move along therewith so that a portion 315c of the flexible display 210 may slide out and/or slide in through the entrance formed in a portion of the electronic device 200 (e.g., the lower portion 320 of the electronic device 200).

Meanwhile, without being limited to what is described and/or illustrated, a structure having a shape supporting sliding-out and/or sliding-in of the flexible display 210 (e.g., a shape having a predetermined curvature to support the curved region of the flexible display 210) may be disposed instead of the roller 451. On the other hand, without being limited to what is described and/or illustrated, the display 210 may be implemented as a rigid display 210, instead of the flexible display 210 capable of being received inside the electronic device 200 in a partially curved state, and the housing of the electronic device 200 may be implemented in such a way that the portion 315a, 315b, or 315c of the electronic device 200 is able to be received inside the electronic device 200 without being bent.

According to various embodiments, as shown in FIG. 3C, the electronic device 200 may include a structure that enables the flexible display 210 to slide in or slide out in at least two or more portions. For example, the electronic device 200 may include a flexible display 210, structures (or a housing) having the flexible display 210 disposed thereon and capable of reciprocating in one direction, respectively, and movement members (e.g., rollers 451). At least a portion 311c of the flexible display 210 may be exposed to the outside of the electronic device 200, and the remaining portions 315d may be received inside the electronic device 200 in a curved state. Referring to FIG. 3C, entrances may be formed in a portion of the electronic device 200 (e.g., the left portion 330a of the electronic device 200) and another portion thereof (e.g., the right portion 330b of the electronic device 200) such that the remaining portions 315d of the flexible display 210 are able to slide out and/or slide in through the same. A first structure and a second structure may respectively reciprocate (e.g., reciprocate to the left and right, respectively), based on the rotation of the respective rollers 451, and according to the reciprocating movement, the remaining portions 315d of the flexible display 210 may slide out and/or slide in through the entrances formed in a portion of the electronic device 200 (e.g., the left portion of the electronic device 200) and another portion thereof (e.g., the right portion of the electronic device 200), respectively. As the portions 315d of the flexible display 210 slide out, the size of the region of the flexible display 210 exposed to the outside of the electronic device 200 may increase, and as the portions 315d of the flexible display 210 slide in, the size of the region of the flexible display 210 received inside the electronic device 200 may be reduced. Meanwhile, without being limited to what is described and/or illustrated, a structure having a shape supporting sliding-out and/or sliding-in of the flexible display 210 (e.g., a shape having a predetermined curvature to support the curved region of the flexible display 210) may be disposed instead of the roller 451. In addition, without being limited to what is described and/or illustrated, the display 210 may be implemented as a rigid display 210, instead of the flexible display 210 capable of being received inside the electronic device 200 in a partially curved state, and the housing of the electronic device 200 may be implemented in such a way that the portion 315d of the electronic device 200 is able to be received inside the electronic device 200 without being bent.

According to various embodiments, as shown in FIG. 3D, the electronic device 200 may include a structure in which the portion of the flexible display 210 received inside the electronic device 200 is wound multiple times and in which the portion wound multiple times slides out. For example, referring to FIG. 3D, the electronic device 200 may include a flexible display 210 and a housing 340 into which at least a portion 315e of the flexible display 210 may slide while being wound multiple times. An entrance O may be formed in a portion of the housing 340 through which at least a portion 315e of the flexible display 210 wound multiple times may slide out. As portions of the flexible display 210 slide out (e.g., according to the operation of the movement device 350 (e.g., a motor)), the size of the region 311e of the flexible display 210 exposed to the outside of the electronic device 200 may be expanded, and as the portion 315e of the flexible display 210 slides in, the size of the region of the flexible display 210 received inside the electronic device 200 may increase.

Hereinafter, an example of an electronic device in which the shape of the electronic device associated with a display is variable according to various embodiments will be described in detail. For example, an example of the electronic device described in 301 of FIG. 3A will be described in detail.

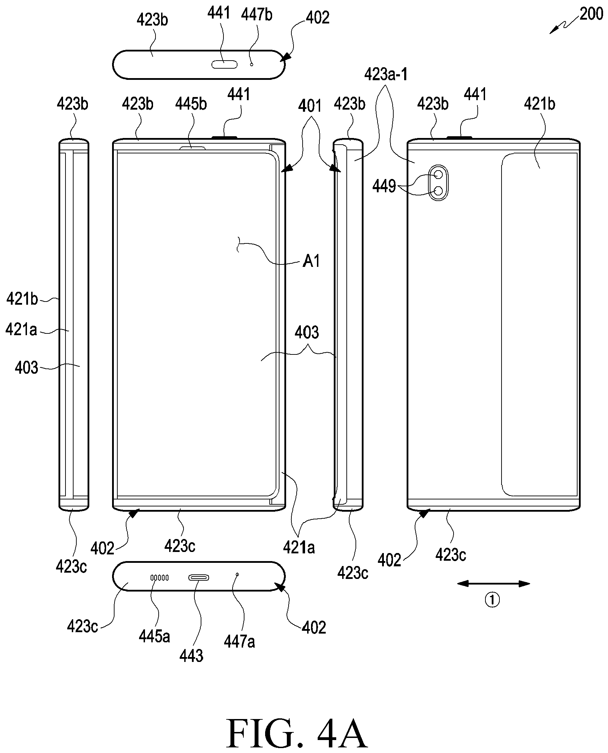

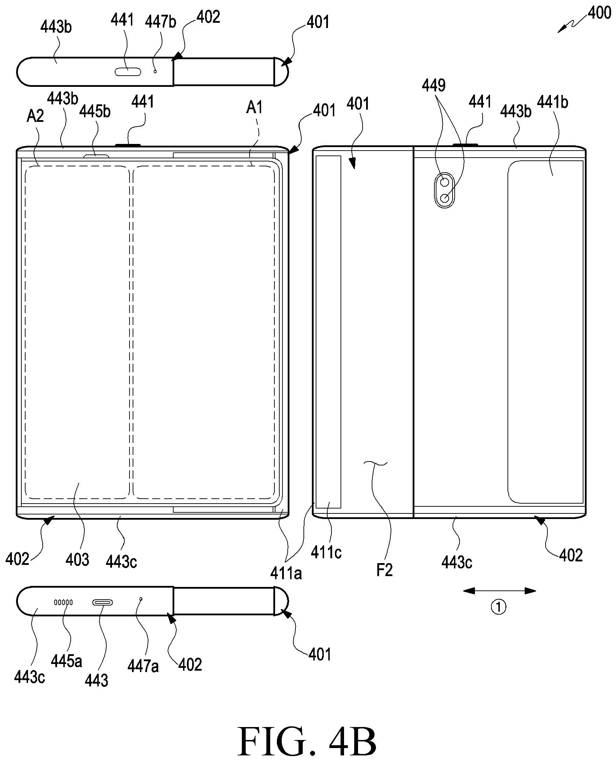

FIG. 4A is a diagram illustrating an electronic device 400 in the state in which a portion (e.g., a portion A2 of a second region) of a flexible display 403 is received inside a second structure 402 according to various embodiments disclosed in this document. FIG. 4B is a diagram illustrating an electronic device 400 in the state in which most of the flexible display 403 is visually exposed to the outside of the second structure 402 according to various embodiments disclosed in this document.

The state shown in FIG. 4A may be defined as a first structure 401 being closed with respect to the second structure 402, and the state shown in FIG. 4B may be defined as the first structure 401 being open with respect to the second structure 402. Depending on the embodiment, a "closed state" or "open state" may be defined as the state in which the electronic device is closed or open. The electronic device 400 may include a first structure 401 and a second structure 402 disposed to be movable on the first structure 401. In a certain embodiment, it may be understood that the first structure 401 is disposed to slide on the second structure 402 in the electronic device 400. According to an embodiment, the first structure 401 may be disposed to reciprocate in the illustrated direction, for example, the direction denoted by an arrow ①, relative to the second structure 402.

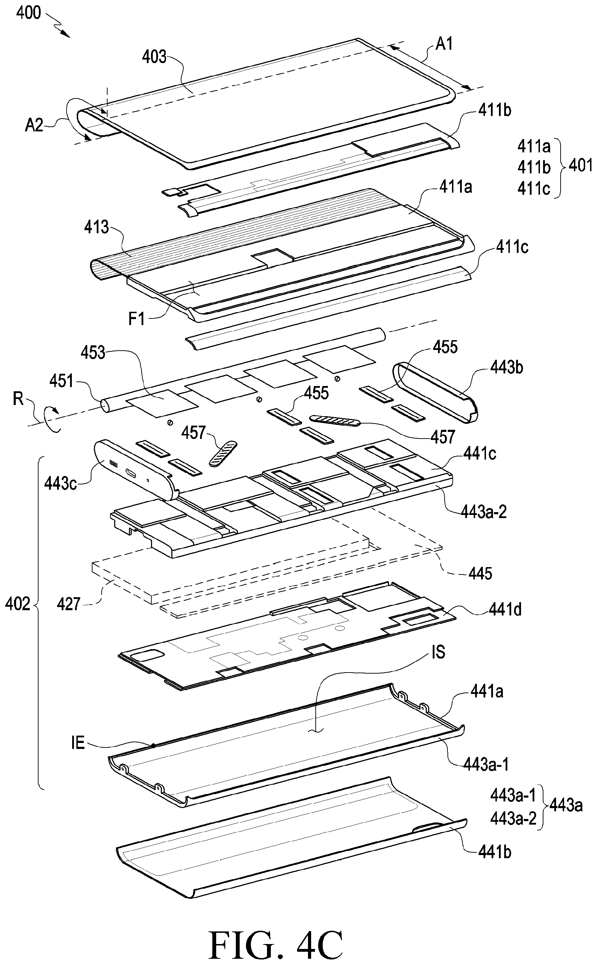

According to various embodiments, the first structure 401 may be referred to as, for example, a first housing, a slide part, a slide housing, or a slide plate and may be disposed to reciprocate on the second structure 402. In an embodiment, the second structure 402 may be referred to as, for example, a second housing, a main part, or a main housing, and may accommodate various electric and electronic components such as a circuit board (e.g., the printed circuit board 425 in FIG. 4C) or a battery (e.g., the battery 427 in FIG. 4C). A portion (e.g., a first region A1) of a flexible display 403 may be seated on the first structure 401. Another portion (e.g., a second region A2) of the flexible display 403 may be received inside the second structure 402 (e.g., a slide-in operation) or exposed to the outside of the second structure 402 (e.g., a slide-out operation) as the first structure 401 moves (e.g., slides) relative to the second structure 402.

According to various embodiments, the first structure 401 may include a first plate 411a (e.g., a slide plate) and include a first face F1 (see FIG. 4C) formed to include at least a portion of the first plate 411a and a second face F2 facing in the opposite direction of the first face F 1. According to an embodiment, the second structure 402 may include a second plate 421a (see FIG. 4C) (e.g., a rear case), a first side wall 423a extending from the second plate 421a, a second side wall 423b extending from the first side wall 423a and the second plate 421a, a third side wall 423c extending from the first side wall 423a and the second plate 421a and parallel to the second side wall 423b, and/or a rear plate 421b (e.g., a rear window). In a certain embodiment, the second side wall 423b and the third side wall 423c may be formed substantially perpendicular to the first side wall 423a. According to an embodiment, the second plate 421a, the first side wall 423a, the second side wall 423b, and the third side wall 423c may be formed such that one side (e.g., a front face) thereof is open to accommodate (or enclose) at least a portion of the first structure 401. For example, the first structure 401 may be coupled to the second structure 402 so as to be at least partially enclosed thereby, thereby sliding in a direction parallel to the first face F1 or the second face F2, for example, in the direction of arrow ①, while being guided by the second structure 402.

According to various embodiments, the second side wall 423b or the third side wall 423c may be omitted. According to an embodiment, the second plate 421a, the first side wall 423a, the second side wall 423b, and/or the third side wall 423c may be formed in separate structures and then coupled or assembled with each other. The rear plate 421b may be coupled to enclose at least a portion of the second plate 421a. In a certain embodiment, the rear plate 421b may be formed to be substantially integral with the second plate 421a. According to an embodiment, the second plate 421a or the rear plate 421b may cover at least a portion of the flexible display 403. For example, the flexible display 403 may be at least partially received inside the second structure 402, and the second plate 421a or the rear plate 421b may cover a portion (e.g., a portion A2 of the second region) of the flexible display 403 received inside the second structure 402.

According to various embodiments, the first structure 401 may move in a first direction (e.g., the direction ①) parallel to the second plate 421a (e.g., the rear case) and the second side wall 423b relative to the second structure 402 between an open state and a closed state such that the first structure 401 is placed at a first distance from the first side wall 423a (e.g., a first side wall portion 423a-1) in the closed state and is placed at a second distance, which is greater than the first distance, from the first side wall 423a (e.g., the first side wall portion 423a-1) in the open state. In a certain embodiment, the first structure 401 may be positioned to enclose a portion of the first side wall 423a (e.g., the first side wall portion 423a-1) in the closed state.

According to various embodiments, the electronic device 400 may include a flexible display 403, a key input device 441, a connector hole 443, audio modules 445a, 445b, 447a, and 447b, or a camera module 449. Although not shown, the electronic device 400 may further include an indicator (e.g., an LED device) or various sensor modules.

According to various embodiments, the flexible display 403 may include a first region A1 and a second region A2. In an embodiment, the first region A1 may be disposed on the first face F 1 so as to extend substantially across at least a portion of the first face F1. The second region A2 may extend from the first region A1, and a portion of the second region A2 may be inserted (or may slide) or received inside the second structure 402 (e.g., a housing) or visually exposed (or slide out) to the outside of the second structure 402 according to the sliding movement of the first structure 401. As will be described later, a portion of the second region A2 may move while being substantially guided by a roller 451 (see FIG. 4C) mounted to the second structure 402 so as to be received inside the second structure 402 or visually exposed to the outside thereof. For example, while the first structure 401 slides, a portion of the second region A2 may be deformed into a curved shape at a position corresponding to the roller 451.

According to various embodiments, if the first structure 401 moves from a closed state to an open state, the second region A2 may be gradually and visually exposed to the outside of the second structure 402 to form substantially a plane together with the first region A1 when viewed from above of the first plate 411a (e.g., a slide plate). The flexible display 403 may be connected to a touch detection circuit, a pressure sensor capable of measuring the intensity (pressure) of a touch, and/or a digitizer detecting a magnetic-field-type stylus pen or may be disposed adjacent thereto. In an embodiment, the second region A2 may be at least partially received inside the second structure 402, and a portion of the second region A2 may be visually exposed to the outside even in the state (e.g., the closed state) shown in FIG. 1. In a certain embodiment, a portion of the second region A2 visually exposed may be positioned on the roller 451, irrespective of the closed state or open state, so that a portion of the second region A2 may remain in a curved shape at a position corresponding to the roller 451. For example, as will be described later, in the closed state of the electronic device 400, a portion of the second region A2 that is not covered by a back cover (e.g., the back cover 401 in FIGS. 4A and 4B, which will be described later) may be exposed to the outside and may have a curvature corresponding to the roller 451.

The key input device 441 may be disposed on the second side wall 423b or the third side wall 423c of the second structure 402. The electronic device 400 may be designed such that the illustrated key input device 441 is excluded or additional key input devices are further included depending on the appearance and the usage state thereof. In a certain embodiment, the electronic device 400 may include a key input device that is not shown, for example, a home key button or a touch pad disposed around the home key button. According to another embodiment, at least a part of the key input device 441 may be located in a region of the first structure 401.

According to various embodiments, the connector hole 443 may be omitted depending on the embodiment and may receive a connector (e.g., a USB connector) for transmitting and receiving power and/or data to and from an external electronic device. Although not shown, the electronic device 400 may include a plurality of connector holes 443, and some of the plurality of connector holes 443 may function as connector holes for transmitting and receiving audio signals to and from an external electronic device. Although the connector hole 443 is illustrated as being disposed on the third side wall 423c in the embodiment, it should be noted that the disclosure is not limited thereto. For example, the connector hole 443 or an additional connector hole, which is not shown, may be disposed on the first side wall 423a or the second side wall 423b.

According to various embodiments, the audio modules 445a, 445b, 447a, and 447b may include speaker holes 445a and 445b and microphone holes 447a and 447b. One of the speaker holes 445a and 445b may be provided as a receiver hole for a voice call, and the other may be provided as an external speaker hole. A microphone for obtaining an external sound may be disposed inside the microphone holes 447a and 447b, and a plurality of microphones may be disposed to detect the direction of sound in a certain embodiment. In a certain embodiment, the speaker holes 445a and 445b and the microphone holes 447a and 447b may be implemented as a single hole, or a speaker (e.g., a piezo speaker) may be provided without the speaker holes 445a and 445b. According to an embodiment, the speaker hole denoted by reference numeral "445b" may be disposed in the first structure 401 so as to be used as a receiver hole for a voice call, and the speaker hole (e.g., an external speaker hole) denoted by reference numeral "445a" or the microphone holes 447a and 447b may be disposed in the second structure 402 (e.g., one of the side walls 423a, 423b, and 423c).

The camera module 449 may be provided in the second structure 402 and may photograph a subject in the opposite direction of the first region A1 of the flexible display 403. The electronic device 400 may include a plurality of camera modules 449. For example, the electronic device 400 may include a wide-angle camera, a telephoto camera, or a close-up camera, and according to an embodiment, the electronic device 400 may include an infrared projector and/or an infrared receiver to measure the distance to the subject. The camera module 449 may include one or more lenses, an image sensor, and/or an image signal processor. Although not shown, the electronic device 400 may further include a camera module (e.g., a front camera) for photographing a subject in the same direction of the first region A1 of the flexible display 403. For example, the front camera may be disposed around the first region A1 or in a region overlapping the flexible display 403, and may photograph a subject through the flexible display 403 in the case where it is disposed in the region overlapping the flexible display 403.

According to various embodiments, an indicator (not shown) of the electronic device 400 may be disposed in the first structure 401 or the second structure 402 and include a light-emitting diode to provide state information of the electronic device 400 using a visual signal. A sensor module (not shown) of the electronic device 400 may produce electrical signals or data values corresponding to an internal operation state of the electronic device 400 or an external environmental state. The sensor module may include, for example, a proximity sensor, a fingerprint sensor, or a biometric sensor (e.g., an iris/face recognition sensor or an HRM sensor). In another embodiment, the sensor module may further include at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, and an illuminance sensor.

FIG. 4C is an exploded perspective view of an electronic device (e.g., the electronic device 400 in FIG. 4A or FIG. 4B) according to various embodiments disclosed in this document.

Referring to FIG. 4C, the electronic device 400 may include a first structure 401, a second structure 402 (e.g., a housing), a flexible display 403 (e.g., a flexible display), a guide member (e.g., a roller 451), a multi-joint hinge structure 413, and/or at least one antenna structure 161. A portion (e.g., the second region A2) of the flexible display 403 may be received inside (e.g., in the gap or space indicated by "IS") the second structure 402 while being guided by the roller 451.

According to various embodiments, the first structure 401 may include a first plate 411a (e.g., a slide plate), a first bracket 411b mounted to the first plate 411a, and/or a second bracket 411c. The first structure 401, for example, the first plate 411a, the first bracket 411b, and/or the second bracket 411c, may be formed of a metal material and/or a non-metal material (e.g., polymer). The first plate 411a may be mounted to the second structure 402 (e.g., the housing) and may reciprocate linearly in one direction (e.g., the direction of arrow ① in FIG. 1) while being guided by the second structure 402. In an embodiment, the first bracket 411b may be coupled to the first plate 411a to form a first face F 1 of the first structure 401 together with the first plate 411a. A first region A1 of the flexible display 403 may be substantially mounted on the first face F1 so as to remain flat. The second bracket 411c may be coupled to the first plate 411a to form a second face F2 of the first structure 401 together with the first plate 411a. According to an embodiment, the first bracket 411b and/or the second bracket 411c may be integrally formed with the first plate 411a. These may be appropriately designed in consideration of the assembly structure of a product to be manufactured or the production process thereof. The first structure 401 or the first plate 411a may be coupled to the second structure 402 to slide relative to the second structure 402.

According to various embodiments, the multi-joint hinge structure 413 may include a plurality of bars or rods extending in a straight line and disposed parallel to the rotation axis R of the roller 451, and the plurality of rods may be arranged along a direction perpendicular to the rotation axis R, for example, along the direction in which the first structure 401 slides. In an embodiment, the multi-joint hinge structure 413 may be connected to one end of the first structure 401 so as to move relative to the second structure 402 as the first structure 401 slides. For example, the multi-joint hinge structure 413 may be substantially received inside (or may slide into) the second structure 402 in a closed state (e.g., the state shown in FIG. 1), and may be extracted (or may slide out) to the outside of the second structure 402 in an open state (e.g., the state shown in FIG. 2). In a certain embodiment, even in the closed state, a part of the multi-joint hinge structure 413 may not be received inside the second structure 402. For example, even in the closed state, a part of the multi-joint hinge structure 413 may be positioned outside the second structure 402 so as to correspond to the roller 451. In an embodiment, the plurality of rods may extend in a straight line to be disposed parallel to the rotation axis R of the roller 451, and may be arranged along a direction substantially perpendicular to the rotation axis R, for example, a direction in which the first structure 401 slides.

According to various embodiments, the rods of the multi-joint hinge structure 413 may rotate around other rods adjacent thereto while remaining parallel to the other adjacent rods. Accordingly, as the first structure 401 slides, the multi-joint hinge structure 413 may form a curved surface at a portion facing the roller 451 and form a flat surface at a portion not facing the roller 451. In an embodiment, the second region A2 of the flexible display 403 may be mounted or supported on the multi-joint hinge structure 413 and visually exposed to the outside of the second structure 402 together with the first region A1 in the open state (e.g., the state shown in FIG. 2). In the state in which the second region A2 is visually exposed to the outside of the second structure 402, the multi-joint hinge structure 413 may form substantially a flat surface, thereby supporting or maintaining the second region A2 in a flat state.

According to various embodiments, the second structure 402 (e.g., the housing) may include a second plate 421a (e.g., a rear case), a rear plate 421b, a third plate 421c (e.g., a front case), and a support member 421d. In a certain embodiment, the electronic device 400 may further include a support member that is not shown. For example, the support member may separate a gap or space where a portion of the flexible display 403 is received from a space where a printed circuit board 421d is disposed. The second plate 421a, for example, the rear case, may be disposed in the opposite direction of the first face F1 of the first plate 411a, and may substantially form the second structure 402 or the appearance of the electronic device 400. In an embodiment, the second structure 402 may include a first side wall 423a extending from the second plate 421a, a second side wall 423b extending from the second plate 421a to be substantially perpendicular to the first side wall 423a, and a third side wall 423c extending from the second plate 421a to be substantially perpendicular to the first side wall 423a and parallel to the second side wall 423b. In the illustrated embodiment, although the second side wall 423b and the third side wall 423c may be manufactured as separate components and mounted or assembled to the second plate 421a, they may be integrally formed with the second plate 421a. In an embodiment, the second structure 402 may accommodate an antenna for proximity wireless communication, an antenna for wireless charging, or an antenna for magnetic secure transmission (MST) in a space that does not overlap the multi-joint hinge structure 413.

According to various embodiments, the rear plate 421b may be coupled to the outer surface of the second plate 421a or may be formed integrally with the second plate 421a depending on an embodiment. In an embodiment, the second plate 421a may be formed of a metal or polymer material, and the rear plate 421b may be formed of a material such as metal, glass, synthetic resin, or ceramic, thereby providing a decorative effect for the exterior of the electronic device 400. According to an embodiment, the second plate 421a and/or the rear plate 421b may be formed of a material that at least partially transmits light. In an embodiment, in the state in which a portion (e.g., the second region A2) of the flexible display 403 is received inside the second structure 402, at least a portion of the second region A2 may be positioned to correspond to at least a portion of the second plate 421a and/or rear plate 421b made of a material that transmits light. For example, in the state of being received inside the second structure 402, the flexible display 403 may output a screen using at least a portion of the second region A2, and the user may recognize the output screen through at least a portion of the second plate 421a and/or rear plate 421b made of a material that transmits light.

According to various embodiments, the third plate 421c may be formed of a metal or polymer material and coupled to the second plate 421a (e.g., the rear case), the first side wall 423a, the second side wall 423b, and/or the third side wall 423c to form an inner space of the second structure 402. According to an embodiment, the third plate 421c may be referred to as a "front case", and the first structure 401, for example, the first plate 411a, may slide while substantially facing the third plate 421c. In a certain embodiment, the first side wall 423a may be configured as a combination of a first side wall portion 423a-1 extending from the second plate 421a and a second side wall portion 423a-2 formed on one edge of the third plate 421c. In another embodiment, the first side wall portion 423a-1 may be coupled to surround one edge of the third plate 421c, for example, the second side wall portion 423a-2, and in this case, the first side wall portion 423a-1 itself may form the first side wall 423a.

According to various embodiments, the support member 421d, which is not shown, may be disposed in the space between the second plate 421a and the third plate 421c, and have a planar shape formed of a metal or polymer material. The support member 421d may provide an electromagnetic shielding structure in the inner space of the second structure 402 or improve the mechanical rigidity of the second structure 402. In an embodiment, the multi-joint hinge structure 413 and/or a partial region (e.g., the second region A2) of the flexible display 403, when received inside the second structure 402, may be positioned in the space between the second plate 421a and the support member.

According to various embodiments, a printed circuit board 425 may be disposed in the space between the third plate 421c and the support member 421d. For example, the printed circuit board 425 may be accommodated in a space inside the second structure 402, which is separated by the support member 421d from the space in which the multi-joint hinge structure 413 and/or a partial region of the flexible display 403 is received. A processor, memory, and an interface may be mounted on the printed circuit board 425. The processor may include, for example, one or more of a central processing unit, an application processor, a graphic processing unit, an image signal processor, a sensor hub processor, or a communication processor.

According to various embodiments, a battery 427 may be disposed in the space between the third plate 421c and the support member 421d. Like the printed circuit board 425 described above, the battery 427 may be accommodated in a space inside the second structure 402, which is separated from the space in which the multi-joint hinge structure 413 and/or a partial region of the flexible display 403 is received.

The memory may include, for example, volatile memory or non-volatile memory.

The interface may include, for example, a high-definition multimedia interface (HDMI), a universal serial bus (USB) interface, an SD card interface, and/or an audio interface. For example, the interface may electrically or physically connect the electronic device 400 to an external electronic device and include a USB connector, an SD card/MMC connector, or an audio connector.

According to various embodiments, the flexible display 403 may be a flexible display based on organic light-emitting diodes and may be at least partially deformed into a curved shape while substantially maintaining a planar shape. In an embodiment, the first region A1 of the flexible display 403 may be mounted or attached to the first face F1 of the first structure 401 to have a substantially flat shape. The second region A2 may extend from the first region A1 to be supported by or attached to the multi-joint hinge structure 413. For example, the second region A2 may extend (or slide out to the outside) in the sliding movement direction of the first structure 401 and may be received inside (or may slide into) the second structure 402 together with the multi-joint hinge structure 413 so as to be at least partially deformed to a curved shape according to the deformation of the multi-joint hinge structure 413.

According to various embodiments, as the first structure 401 slides on the second structure 402, the region of the flexible display 403 visually exposed to the outside may vary. The electronic device 400 (e.g., the processor) may change the region of the flexible display 403 to be activated based on the size of the flexible display 403 visually exposed to the outside. For example, in the open state or in an intermediate state between the closed state and the open state, the electronic device 400 may activate the region of the second structure 402 visually exposed to the outside, among the total size of the flexible display 403. In the closed state, the electronic device 400 may activate the first region A1 of the flexible display 403 and deactivate the second region A2. In the closed state, if there is no user input for a predetermined period of time (e.g., 30 seconds or 2 minutes), the electronic device 400 may deactivate the entire region of the flexible display 403. In a certain embodiment, in the state in which the entire region of the flexible display 403 is inactive, the electronic device 400 may activate a partial region of the flexible display 403 as necessary (e.g., a notification according to a user setting or a missed call/message arrival notification), thereby providing visual information through at least a portion of the second plate 421a and/or rear plate 421b made of a material that transmits light.

According to various embodiments, in the open state (e.g., the state shown in FIG. 4B), substantially the entire region (e.g., the first region A1 and the second region A2) of the flexible display 403 may be visually exposed to the outside, and the first region A1 and the second region A2 may be disposed to form a plane. In an embodiment, even in the open state, a portion (e.g., one end) of the second region A2 may be positioned to correspond to the roller 451, and the portion of the second region A2 corresponding to the roller 451 may remain in a curved shape. For example, in various embodiments disclosed in this document, even though it is stated that "the second region A2 is disposed to form a plane in the open state", a portion of the second region A2 may remain in a curved shape, and similarly, even though it is stated that "the multi-joint hinge structure 413 and/or the second region A2 is received inside the second structure 402 in the closed state", a portion of the multi-joint hinge structure 413 and/or second region A2 may be located outside the second structure 402.

According to various embodiments, a guide member, for example, the roller 451, may be rotatably mounted to the second structure 402 at a position adjacent to one edge of the second structure 402 (e.g., the second plate 421a). For example, the roller 451 may be disposed adjacent to the edge (e.g., the portion denoted by "IE") of the second plate 421a parallel to the first side wall 423a. Although reference numerals are not assigned in the drawing, another side wall may extend from the edge of the second plate 421a adjacent to the roller 451, and the side wall adjacent to the roller 451 may be substantially parallel to the side wall 423a. In an embodiment, the side wall of the second structure 402 adjacent to the roller 451 may be formed of a material that transmits light, and a portion of the second region A2 may provide visual information through a portion of the second structure 402 while being received inside the second structure 402. The expression "it may be disposed adjacent" may indicate that it is disposed to be spaced 5 mm apart or less. For example, the roller 451 may be disposed to be spaced 5 mm apart or less from the edge (e.g., the portion indicated by reference numeral "IE") of the second plate 421a parallel to the first side wall 423a.

According to various embodiments, one end of the roller 451 may be rotatably coupled to the second side wall 423b and the other end may be rotatably coupled to the third side wall 423c. For example, the roller 451 may be mounted to the second structure 402 so as to rotate about the rotation axis R substantially perpendicular to the sliding movement direction (e.g., the direction of arrow ① in FIG. 1 or 2) of the first structure 401. The rotation axis R may be disposed to be substantially parallel to the first side wall 423a and may be positioned, for example, on one edge of the second plate 421a so as to be far away from the first side wall 423a. In an embodiment, the gap between the outer circumferential surface of the roller 451 and the inner surface of the edge of the second plate 421a may form an entrance through which the multi-joint hinge structure 413 or the flexible display 403 enters the second structure 402.

Meanwhile, without being limited to the above, the electronic device 400 may not include the roller 451 and may include a guide member and/or a guide structure for guiding the flexible display 403, instead of the roller 451. In an embodiment, the electronic device 400 may include, as the guide member and/or the guide structure, a member (not shown) (hereinafter a fixing member) that has one end fixed to the second side wall 423b and the other end fixed to the third side wall 423c. The fixing member may include an outer circumferential surface having a predetermined curvature. The second region A2 of the flexible display 403 may be supported and guided by the outer circumferential surface of the fixing member so as to slide out to the outside or slide into the inside. Hereinafter, for convenience of explanation, a description will be made for the case in which the electronic device 401 is provided with the roller 451 by way of example.

According to various embodiments, when the flexible display 403 is deformed into a curved shape, the roller 451 may maintain the curvature radius of the flexible display 403 to a certain degree, thereby suppressing excessive deformation of the flexible display 403. The "excessive deformation" may indicate that the flexible display 403 is deformed to have a very small radius of curvature enough to damage pixels or signal wires included in the flexible display 403. For example, the flexible display 403 may be moved or deformed while being guided by the roller 451 and may be protected from damage due to the excessive deformation. In a certain embodiment, the roller 451 may rotate while the multi-joint hinge structure 413 or the flexible display 403 is inserted into the second structure 402 or drawn out therefrom. For example, the roller 451 may suppress or prevent friction between the multi-joint hinge structure 413 (or the flexible display 403) and the second structure 402, thereby facilitating the multi-joint hinge structure 413 (or the display 403) to be inserted into the second structure 402 or drawn out therefrom.

According to various embodiments, the electronic device 400 may include a plurality of support sheets 253. For example, each of the support sheets 253 may be formed of a material having flexibility and a certain degree of elasticity, for example, an elastic material such as silicone or rubber, and may be mounted or attached to the roller 451 so as to be selectively wound around the roller 451 according to the rotation of the roller 451. In an embodiment, a plurality of (e.g., four) support sheets 253 may be arranged in the direction of the rotation axis R of the roller 451. For example, the plurality of support sheets may be mounted to the roller 451 at predetermined intervals from other support sheets adjacent thereto and may extend in a direction perpendicular to the rotation axis R. In another embodiment, one support sheet may be mounted or attached to the roller 451, and the number, sizes, or shapes of the support sheets 253 may appropriately vary depending on an actually manufactured product. In a certain embodiment, the support sheets 253 may be rolled around the outer circumferential surface of the roller 451 or unrolled from the roller 451 to a flat shape between the flexible display 403 and the third plate 421c according to the rotation of the roller 451. In another embodiment, each of the support sheets 253 may be referred to as a "support belt", an "auxiliary belt", a "support film", or an "auxiliary film".

According to various embodiments, the electronic device 100 may further include the guide rail(s) 455 and/or the actuating member(s) 457. The guide rail(s) 455 may be mounted to the second structure 402, for example, the third plate 421c, to guide the sliding movement of the first structure 401 (e.g., the first plate 451a or the slide plate). The actuating member(s) 457 may include a spring or a spring module that provides an elastic force in a direction in which both ends thereof go far away from each other, and one end of the actuating member(s) 457 may be rotatably supported by the second structure 402, and the other end may be rotatably supported by the first structure 401.

According to various embodiments, when the first structure 401 slides, both ends of the actuating member(s) 457 may be located closest to each other at a point (hereinafter a "closest point") between the closed state and the open state. For example, in a section between the closest point and the closed state, the actuating member(s) 457 may provide an elastic force to the first structure 401 in a direction of moving toward the closed state, and in a section between the closest point and the open state, the actuating member(s) 457 may provide an elastic force to the first structure 401 in a direction of moving toward the open state.

Hereinafter, an example of configurations of the electronic device 200 according to various embodiments of the electronic device 200 described above with reference to FIGS. 2, 3, and 4 will be described. Meanwhile, the description of the electronic device 200 made with reference to FIG. 1 may be applied to the description of the electronic device 200 below, and a redundant description will be omitted.

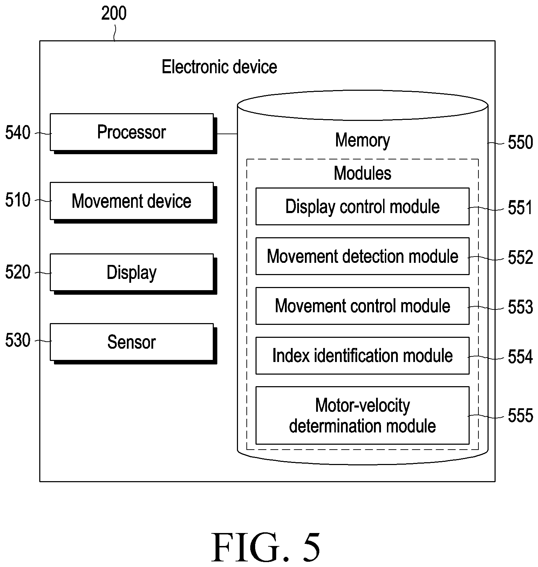

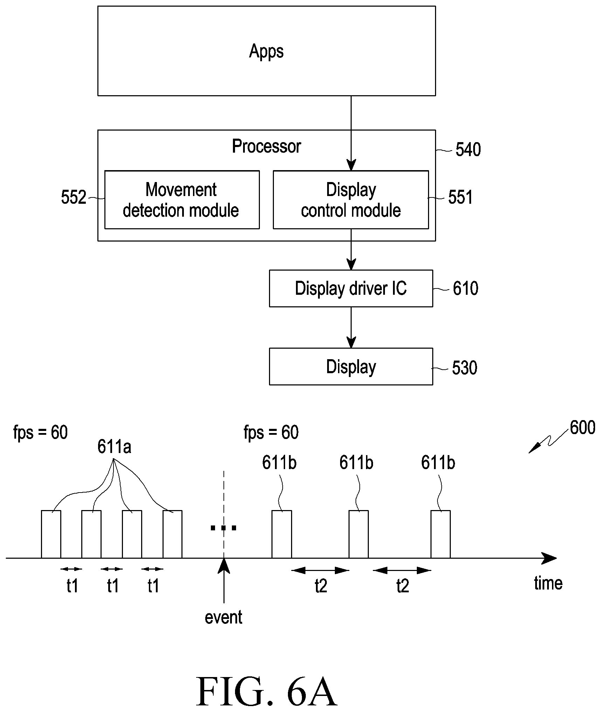

FIG. 5 is a diagram illustrating the configuration of the electronic device 200 according to various embodiments. Hereinafter, FIG. 5 will be described with reference to FIGS. 6A to 6B.

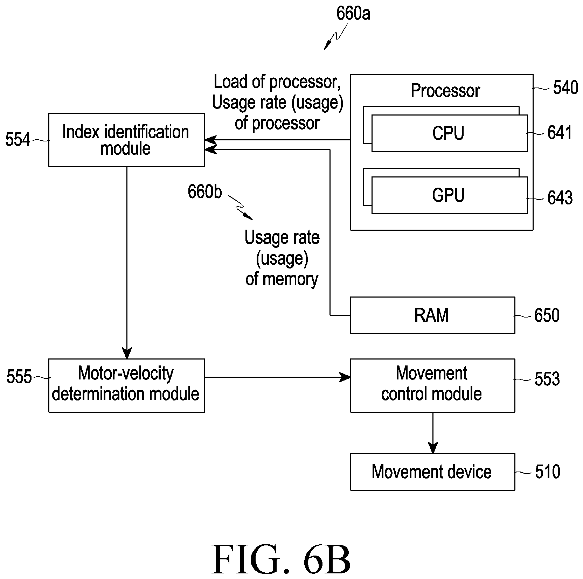

FIG. 6A is a diagram illustrating an example of a processing operation to display content on a display 210 of the electronic device 200 according to various embodiments. FIG. 6B is a diagram illustrating an example of an operation of identifying a value of a parameter associated with processing of displaying content in the electronic device 200 according to various embodiments.

According to various embodiments, the electronic device 200, as shown in FIG. 5, may include a movement device 510, a sensor 520, a display 530 (e.g., the display 210 in FIGS. 2 to 3), a processor 540, and memory 550. Without being limited to what is shown in FIG. 5, the electronic device 200 may be implemented to include more or fewer configurations. For example, the electronic device 200 may be implemented to further include the configurations of the electronic device 101 described with reference to FIG. 1.

Hereinafter, an example of the movement device 510 according to various embodiments will be described first.

According to various embodiments, the movement device 510 may include devices for sliding the display 530 (or the first structure 401 or the first plate 411a). For example, the movement device 510 may include a motor for rotating the roller 451 described above in one direction (e.g., clockwise or counterclockwise). In addition to the motor, the movement device 510 may include various types of electronic devices 200 for rotating the roller 451 to slide the display 530 (or the first structure 401 or the first plate 411a). Meanwhile, without being limited to what is described, the electronic device 200 may include a guide member and/or a guide structure (e.g., a hinge structure implemented using shape memory alloy in which the structure moves as the shape thereof changes when heat and/or power is applied) for guiding the display 530, instead of the roller 451.

Hereinafter, an example of the sensor 520 will be described.

According to various embodiments, when the display 530 (or the first structure 401 or the first plate 411a) slides, the sensor 520 may sense the sliding movement of the display 530 and return electrical values (e.g., current values and/or voltage values) indicating the state of sliding movement. The processor 540, which will be described later, may obtain the electrical values and identify the state associated with the sliding movement. For example, the state associated with the sliding movement may include at least one of the start or end of the sliding movement of the display 530, the state (e.g., the open state, the closed state, or the intermediate state) of the electronic device 200 according to the sliding movement, or the distance of sliding movement. As an example, at least one sensor 520 may be implemented as a sensor (e.g., an image sensor 300 or an optical sensor) for detecting specific content (e.g., RGB colors) displayed on a partial region of the received portion (e.g., the second region A2) of the display 530, may identify that the detection state of the specific content changes (e.g., the content is moved or the content is not displayed) when the display 530 moves, and may return an electrical value indicating the start of sliding movement. At this time, when the sliding movement ends, the electronic device 200 may re-display specific content on a partial region of the received portion (e.g., the second region A2) of the display 530, and the at least one sensor 520 may detect the re-displayed content and return an electrical value indicating the end of sliding movement. As another example, the at least one sensor 520 may include a sensor that detects an electromagnet attached when the sliding movement of the display 530 starts or ends, and may return an electrical value indicating the start or end when the sliding movement starts or ends. As another example, at least one sensor 520 may be implemented as a sensor (e.g., a pressure sensor, a resistance sensor, etc.) for detecting a dielectric that moves when the display 530 slides, and may return an electrical value indicating the sliding movement distance, based on the distance of the moving dielectric. Meanwhile, without being limited to the above description, the electronic device 200, based on a signal for controlling a motor that rotates the roller 451 (e.g., 251) of a movement control module 553, which will be described later, instead of receiving a value from the at least one sensor 520, may identify the state associated with the sliding movement of the display 530 described above.

In addition, according to various embodiments, the sensor 520 may include sensors for obtaining a variety of information in addition to the state (e.g., a grip state, or a mounted state) of the electronic device 200. For example, the at least one sensor 520 may include a grip sensor. The electronic device 200 may identify whether or not the electronic device 200 is being held using the grip sensor. For example, the at least one sensor 520 may include an acceleration sensor (e.g., a 6-axis sensor). The electronic device 200 may detect the disposition state of the electronic device 200 using the acceleration sensor, and may also detect whether or not the electronic device 200 is disposed on an object according to the disposition state.

In addition, according to various embodiments, the sensor 520 may include sensors for identifying the state of the electronic device 200. For example, the at least one sensor may include a temperature sensor for measuring the temperature of the electronic device 200.

Hereinafter, an example of the display 530 according to various embodiments will be described.

According to various embodiments, the display 530 may be disposed such that the size of the region exposed to the outside of the electronic device 200 and the size of the region received inside the electronic device 200 may variable, as described above in FIGS. 2 to 4. Although the display 530 may be implemented as a flexible display 530, it may also be implemented as a rigid display 530 described above.

According to various embodiments, the display 530 may update and display content, based on a configured scan rate and/or length sensing scan rate. The content may be defined as terms such as a screen or view, and the content may include an application execution screen and media content such as images and videos. The scan rate may indicate the number of pieces of content displayed on the display 530 per unit time (e.g., 1 second). The scan rate may be configured based on the settings of the electronic device 200, settings in the application currently running in the foreground mode, and/or settings of the screen currently being displayed. The length sensing scan rate may be a reciprocal of the length sensing cycle in which a value of a parameter associated with the sliding movement is identified using the sensor 520 by the processor 540 (e.g., the movement detection module 552), which will be described later. Displaying content on the display 530 may be performed by a display control module, which will be described later.

Hereinafter, an example of the processor 540 according to various embodiments will be described. The processor 540 may include at least one of an application processor (AP), a central processing unit (CPU), a graphic processing unit (GPU), a display processing unit (DPU), or a neural processing unit (NPU). The operation of the processor 540 described below may be performed according to execution of modules (e.g., the display control module 551, the movement detection module 552, the movement control module 553, the index identification module 554, and the motor-velocity determination module 555) stored in the memory 550. At least some of the modules (e.g., the display control module 551, the movement detection module 552, the movement control module 553, the index identification module 554, and the motor-velocity determination module 555) stored in the memory 550 may be implemented (e.g., executed) in software, firmware, or a combination of at least two or more thereof. For example, the modules may be implemented in the form of applications, programs, computer code, instructions, routines, or processes that may be executed by the processor 540. Accordingly, if the modules (e.g., the display control module 551, the movement detection module 552, the movement control module 553, the index identification module 554, and the motor-velocity determination module 555) are executed by the processor 540, the modules (e.g., the display control module 551, the movement detection module 552, the movement control module 553, the index identification module 554, and the motor-velocity determination module 555) may cause the processor 540 to perform operations associated with the modules (or functions capable of being provided by the modules). Therefore, the expression in which a specific module performs an operation may be interpreted as the processor 540 performing the corresponding operation as the specific module is executed. Alternatively, the modules (e.g., the display control module 551, the movement detection module 552, the movement control module 553, the index identification module 554, and the motor-velocity determination module 555) may also be implemented as part of a specific application. Alternatively, without being limited to what is described and/or illustrated, the respective modules may be implemented as hardware (e.g., a processor or a control circuit) separate from the processor 540. Meanwhile, at least some of the operations of the modules described below may be implemented as separate modules rather than the relevant module. As an example, some of the operations of the movement control module 553 described below may be implemented as a first module (e.g., a first program), and the remaining operations may be implemented as a second module (e.g., a second program).

First, an example of the movement detection module 552 according to various embodiments will be described below.

According to various embodiments, the movement detection module 552 may identify values of parameters associated with the sliding movement using the sensor 540 in a specified cycle. The specified cycle may be defined as a length sensing cycle, and the reciprocal of the length sensing cycle may be defined as a length sensing scan rate. For example, the parameters may include parameters related to the state (movement state) of the electronic device 200 associated with the sliding movement (e.g., the closed state, the start of sliding movement, sliding movement in progress, and the end of sliding movement) and the region of the display 530 exposed to the outside. The parameters related to the region of the display 530 exposed to the outside may include the size of the region of the display 530 exposed to the outside (exposed size), a ratio of the region of the display 530 exposed to the outside to the size of the region received in the inside (exposure ratio), and the distance by which the display 530 slides out and/or slides in (sliding movement distance). For example, if a value is produced from the sensor 520 as the display 530 slides, the movement detection module 552 may obtain a value indicating the movement state of the electronic device 200 (e.g., the closed state, the start of sliding movement, sliding movement in progress, and the end of sliding movement). The movement detection module 552 may identify a value of the parameter corresponding to the obtained value. In addition, for example, if a value is produced from the sensor 520 as the display 530 slides, the movement detection module 552 may obtain a value of the parameter associated with the region of the display 530 exposed to the outside, which corresponds to the produced value.

Hereinafter, an example of the display control module 551 according to various embodiments will be described.

According to various embodiments, the display control module 551 may update content displayed on the display 530. For example, the display control module 551 may obtain information about content (or screen or view) in a cycle corresponding to the scan rate and/or length sensing scan rate configured in the electronic device 200, and periodically transmit the obtained information about the content to a display driver IC 610 such that the display 530 may display the obtained content. For example, referring to FIG. 6A, the display control module 551, based on vertical synchronization signals (Vsync) produced in a cycle corresponding to the scan rate (e.g., fps=60) configured in the electronic device 200 and/or in a length sensing cycle (not shown) thereof, may request update of the content to at least some of the applications (Apps) currently running in the foreground mode and obtain information about the content (or screen or view) updated (or drawn) by at least some of the applications. The information about the content may include information about color values for respective pixels. The display control module 551 may transmit the periodically obtained information about the content (or screen or view) to the display driver IC 610. The display driver IC 610 may display the content in a cycle corresponding to the scan rate. Since the operation of the display driver IC 610 for displaying content is well-known, a detailed description thereof will be omitted. Meanwhile, as an example, the display control module 551 may include a surface flinger and a graphics HAL. In addition, without being limited to what is described and/or illustrated, the display control module 551 may obtain content from various types of devices (e.g., the memory and a communication circuit), in addition to the content obtained from applications (Apps), and perform the operation described above.

According to various embodiments, if the size of the region of the display 530 exposed to the outside changes, the display control module 551 may produce content 611a having an size corresponding to the changed size in a cycle corresponding to the scan rate and/or a length sensing cycle thereof, and perform an operation of controlling the produced content 611a to be displayed on the display 530 (e.g., an operation of controlling the display driver IC 610 described above). Accordingly, referring to 600 in FIG. 6A, while the size of the region of the display 530 exposed to the outside changes as the display 530 slides, the content 611a having the changed size may be displayed at a time interval corresponding to the scan rate and/or a length sensing cycle thereof, thereby displaying the content 611a on the entire region of the display 530 whose size changes. If an event that causes the sliding movement of the display 530 occurs, the display control module 551 may obtain information about parameters (e.g., the size of the exposed region, a ratio of the exposed region to the received region, and the sliding-out distance (or sliding-in distance)) related to the region of the display 530 from the movement detection module 552 in a cycle corresponding to the scan rate and/or a length sensing cycle thereof. In an embodiment, the display control module 551, based on periodically obtained information about the parameters associated with the region of the display 530, may update the size of the previous region of the display 530 exposed to the outside to identify the current size of the region of the display 530 exposed to the outside and change (e.g., resize) the size of the content 611b to the identified size. According to a change in the region of the content 611b, the width of the content may be changed to correspond to the updated width of the display while the length of the content remains the same. Alternatively, instead of changing (e.g., resizing) the size of the content, the display control module 551, based on providing information about the updated size to the applications (Apps), may obtain content 611b having an updated size returned (or output) from the applications (Apps). The display control module 551 may periodically transmit information about the content 611b having the changed size to the display driver IC 610. Accordingly, the display driver IC 610 may display the content 611b having the changed size in a cycle corresponding to the scan rate. Meanwhile, referring to 600 in FIG. 6A, the difference in time (or cycle) at which the content 611b displayed on the display 530 is updated may be delayed (or the scan rate is reduced) (e.g., the difference in display time of the content 611b may increase from t1 to t2) after a sliding movement event occurs. For example, a frame drop phenomenon may occur. For example, in the case where the display control module 551 performs a content processing operation to display by changing the size of the content, a delay time for the processing operation may occur in a specific condition (e.g., if the value of a parameter associated with processing the content to be described later is equal to or greater than a specific value (e.g., 60%)). The processing operation may include an operation of updating content according to the cycle corresponding to the scan rate and/or a length sensing cycle, and an operation of displaying the updated content. In order to prevent the problem with deterioration of quality associated with the display of content while the display 530 is moving (or while the motor is controlled) due to the frame drop phenomenon, the electronic device 200 may perform an operation of increasing the rotational velocity of the motor, which will be described later. In addition, in an embodiment, without being limited to what is described, the display control module 551 may display new content that is different from the currently displayed content in the newly exposed region, instead of performing an operation of resizing the content.

Hereinafter, an example of the movement control module 553 according to various embodiments will be described.

According to various embodiments, the movement control module 553 may perform control such that the display 530 (or the first structure 401 or the first plate 411a) of the electronic device 200 slides. For example, the movement control module 553 may drive the above-described movement device 510 (e.g., the motor) to control the roller 451 to rotate in one direction so that the display 530 slides. For example, if the movement control module 553 rotates the roller 451 in a first direction (e.g., counterclockwise), the display 530 may slide out, and if the movement control module 553 rotates the roller 451 in a second direction (e.g., clockwise), the display 530 may slide in, and if the movement control module 553 rotates the roller 451 in the first direction and then rotates the same in the second direction, the display 530 may slide out and then slide in. According to the control of the movement control module 553, the distance by which the display 530 slides (e.g., sliding-out movement or sliding-in movement) may be limited (e.g., about 40 mm). For example, the maximum distance of the sliding-out movement is the distance at which the first structure 401 is maximally exposed to the outside through the second structure 202 while being received inside the second structure 202, and may be determined by at least one of the width of the first structure 401 or the width of the second structure 202. In addition, for example, the maximum distance of the sliding-in movement is the distance at which the first structure 401 received inside the second structure 202 while the first structure 401 is maximally exposed to the outside through the second structure 202, and may be determined by at least one of the width of the first structure 401 or the width of the second structure 202. For example, as at least one of the width of the first structure 401 or the width of the second structure 202 increases, the first structure 401 may be guided (or supported) by the inner lower surface of the second structure 202 to slide a longer distance when the first structure 401 slides (e.g., sliding-out movement, or sliding-in movement). The movement control module 553 may control the display 530 to slide, based on the occurrence of a specific event that causes the sliding movement. For example, the specific event may include identification of execution and/or driving of the specified app, and a user input to cause the sliding movement of the flexible display 530 (e.g., identification of selection of an icon or identification of pressing physical keys). At this time, the movement control module 553 may determine the distance by which the display is to be moved, and the distance by which the display is to be moved may include a full expansion distance (about 40 mm), expansion to a size to be displayed in a 16:9 screen ratio, or half expansion (e.g., 20 mm).

According to various embodiments, the movement control module 553 may perform control such that the display 530 (or the first structure 401 or the first plate 111a) slides at a specified speed (e.g., sliding-out movement or sliding-in movement). For example, the movement control module 553 may control the rotational velocity of the motor at a preconfigured rotational velocity such that the display 530 may move at a speed (e.g., 40 mm/sec) capable of moving a maximum distance (e.g., about 40 mm) for a preconfigured time (e.g., 1 sec). In addition, for example, the movement control module 553 may control the rotational velocity of the motor at a rotational velocity determined based on the values of parameters associated with processing of content (e.g., the processor load, the processor usage (or usage rate), and the memory (RAM) usage (or usage rate)). This will be described later in the operation of the index identification module 554 and the motor-velocity determination module 555.

According to various embodiments, the movement control module 553 may provide a specific signal to the movement device 510 (e.g., the motor) to drive the motor. For example, the movement control module 553 may provide a PWM signal. At this time, the movement control module 553 may control the rotational velocity of the motor by controlling the characteristics (e.g., frequency and/or magnitude) of the PWM signal provided to the movement device 510 (e.g., the motor). For example, the rotational velocity of the motor may be proportional to the frequency and magnitude of the PWM signal. Referring to FIG. 6, the movement control module 553 may receive information about the magnitude of power (e.g., peak power (or peak current or peak voltage) capable of being supplied from a battery) for controlling (or driving) the motor, which is transmitted from a power management module 575. The movement control module 553 may provide a PWM signal with characteristics (e.g., frequency and/or magnitude) corresponding to the magnitude of power to the movement device 510 (e.g., the motor) through a movement device driver (e.g., a motor driver). For example, the movement control module 553 may provide the movement device 510 (e.g., the motor) with a PWM signal having a high frequency and/or a high magnitude in proportion to the power.

Hereinafter, an example of the index identification module 554 and the motor-velocity determination module 555 according to various embodiments will be described.

According to various embodiments, the index identification module 554 may identify the value of at least one parameter associated with a process of displaying content. For example, the at least one parameter is a factor that affects the time taken for the processing operation (e.g., delay the operation) to resize the content while the display 530 is moving (or while controlling the motor) and, referring to FIG. 6B, may include values 660a associated with the processor 540 and values 660b associated with memory 650 (e.g., RAM). In addition, without being limited to what is described, the parameters may further include various types of values that affect processing operations, such as a remaining battery percentage of the electronic device, a power setting value, and a display brightness value. If the values of the parameters increase, the operation of processing the content may be delayed (or the difference in time for the content to be displayed on the display 530 may increase). For example, the values 660a associated with the processor 540 may include a load (e.g., a load average) of the processor 540 (e.g., at least one (e.g., single or multi-core) CPU 641 or at least one GPU 643) (or, a load (e.g., a load average) of a system) and the usage (or usage rate) of the processor 540. The values 660b associated with the memory 650 (e.g., RAM) may include the usage (or usage rate) of the memory 650 (e.g., RAM). For example, the load of the processor 540 (or the load of a system) may indicate the number of processes (or processing operations) currently being performed or waiting to be performed by the processor 540. The index identification module 554, based on the number of processes (or tasks) in an executable state in the processor 540 and the number of processors (or cores) waiting for I/O, may identify the load of the processor 540, and since the operation of calculating the load of the processor is well-known, a detailed description thereof will be omitted. In addition, for example, the index identification module 554, based on an operation (e.g., process accounting) of identifying the usage time of the process in the processor 540, may identify the usage or usage rate of the processor 540, and since the operation of calculating the usage or usage rate of the processor 540 is well-known, a detailed description thereof will be omitted. In addition, for example, in order to assign a task to the appropriate processor 540 (or a plurality of cores of the processor 540) based on a kernel (e.g., a Linux kernel), the index identification module 554 may calculate the load of the processor (or system load), based on information (e.g., a ratio of states) associated with the state (e.g., a running state, a sleep state, or a wait state) of the processor 540, and this is a well-known technique, so a detailed description thereof will be omitted. In addition, for example, the index identification module 554, based on an operation of identifying the number of files stored in the memory 650 for processing for a specific period of time, may identify the usage or usage rate of the memory 650, and since the operation of calculating the usage or usage rate of the memory 650 is well-known, a detailed description thereof will be omitted.

The index identification module 554 may identify the value of at least one parameter associated with a process of displaying content of the system in a specified cycle, but is not limited to what is described, and if an event that causes sliding movement occurs, the value of the parameter may also be identified.

According to various embodiments, the motor-velocity determination module 555 may determine the rotational velocity of the motor, based on the value of at least one parameter associated with a process of displaying content, which is received from the index identification module 554. For example, the motor-velocity determination module 555 may increase the velocity of the motor as the value of at least one parameter associated with a process of displaying content increases. As the velocity of the motor increases, the quality (Pqos) associated with the display of content may be improved while the display 530 is sliding. The value of quality (Pqos) associated with the display of content may indicate the visibility of content to the user (or the content display quality experienced by the user) observing the content displayed on the display 530 while the display 530 is sliding. As the value of the quality (Pqos) associated with the display of content increases, the user may not perceive a frame drop when displaying the content while the display 530 is sliding, thereby recognizing the content to be displayed naturally. As an example, the quality (Pqos) associated with the display of content may be calculated as in Equation 1 below. In Equation 1 below, "movement distance of display per unit time" may also be understood as the rotational velocity of the motor. Although not described in Equation 1, a predetermined correction coefficient may be further added to Equation 1. The correction coefficient may be implemented to offset the units of the numerator and denominator, but is not limited to what is described.

[Equation 1]

$$Pqos = \frac{\text{Movement distance of display per unit time}}{\text{Time difference for update of content}}$$

Referring to Equation 1 above, even in the case where the value of at least one parameter associated with a process of displaying content increases, thereby delaying the operation of processing the content, so that the difference in time for the content to be actually updated (or re-drawn or displayed) increases, if the rotational velocity of the motor is increased, the quality of content display (Pqos) may be ensured. Meanwhile, if the value of at least one parameter associated with a process of displaying content is equal to or greater than a specific value (e.g., 60%), the operation of processing the content may be delayed, so the motor-velocity determination module 555 may perform the operation of increasing the velocity of the motor only if the value of at least one parameter is equal to or greater than a specific value (e.g., 60%). The operation of the motor-velocity determination module 555 will be described in detail later. Meanwhile, without being limited to what is described and/or illustrated, in the case where the movement device is implemented as another device, instead of the motor, the motor-velocity determination module 555 may determine the velocity at which the display 530 is moved by another device, based on the value of at least one parameter associated with a process of displaying content.

Hereinafter, an example of operation of the electronic device 200 according to various embodiments will be described.

According to various embodiments, the electronic device 200 (e.g., the processor 540) may identify a value of a parameter associated with processing of content for at least one processor 540 and/or memory and, if the identified value is increased, control the motor at a higher rotational velocity. Accordingly, the quality (Pqos) of content display may be guaranteed while the display 530 is sliding as described above.

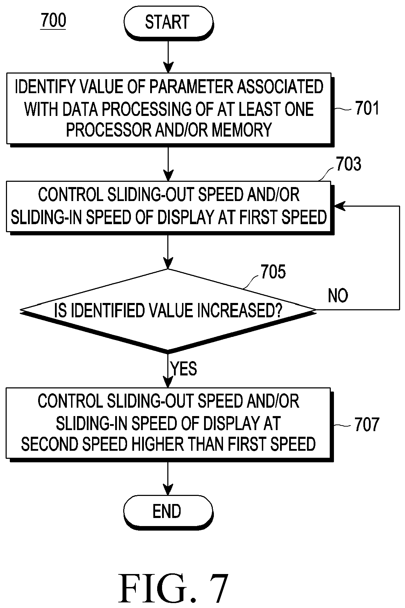

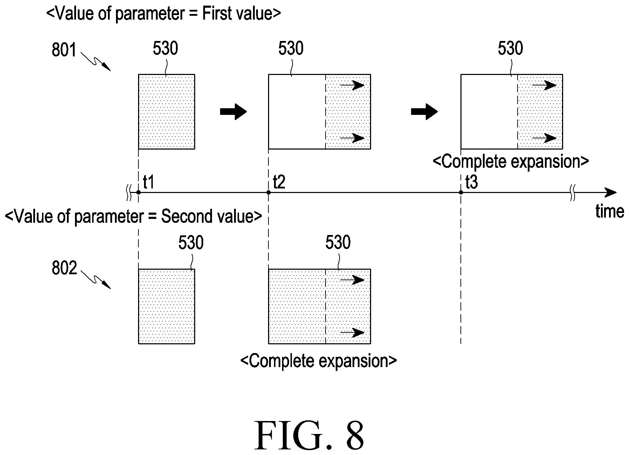

FIG. 7 is a flowchart 700 illustrating an example of the operation of an electronic device 200 according to various embodiments. According to various embodiments, the operations shown in FIG. 7 are not limited to the illustrated sequence and may be performed in various sequences. In addition, according to various embodiments, operations more than the operations shown in FIG. 7 may be performed, or at least one operation fewer than that may be performed. Hereinafter, FIG. 7 will be described with reference to FIG. 8.

FIG. 8 is a diagram illustrating an example in which the movement speed of a display 530 increases when the usage (or usage rate) of a processor 540 and/or memory increases according to various embodiments.

According to various embodiments, the electronic device 200 may identify a value of a parameter associated with content processing for at least one processor 540 and/or memory in operation 701 and control the movement speed of the display 530 at a first speed in operation 703. For example, the electronic device 200 (e.g., the index identification module 554) may identify, as the value of at least one parameter associated with a process of displaying content, the usage (or usage rate) of the processor 540 and/or the usage (or usage rate) of the memory 650 (e.g., RAM). In an embodiment, if an event that causes sliding movement occurs, the electronic device 200 (e.g., the motor-velocity determination module 555) may control the motor at a first rotational velocity corresponding to the identified usage rate of the processor 540 and/or usage rate of the memory 650 (e.g., RAM) (e.g., transmit a signal corresponding to the first rotational velocity to the motor). The electronic device 200 may modify (e.g., resize) the content to have a size equal to the changed size of a region of the display 530 exposed to the outside in a cycle corresponding to a configured scan rate while controlling the motor, and display the modified content on the display 530. As described above, the event causing the sliding movement may include identification of execution and/or driving of a specified app, and a user input to cause the sliding movement of the flexible display 530 (e.g., identification of selection of an icon or identification of pressing physical keys). According to the control of the motor, as shown in 801 of FIG. 8, the display 530 may be moved at a first speed corresponding to the first rotational velocity.

According to various embodiments, the electronic device 200 may determine whether or not the identified value of the parameter increases in operation 705 and, if the identified value of the parameter increases, control such that the movement speed of the display 530 switches to a second speed, which is greater than the first speed, in operation 707. For example, the electronic device 200 (e.g., the index identification module 554) may periodically identify the usage (or usage rate) of the processor 540 and/or the usage (or usage rate) of the memory, and/or identify the usage rate of the processor 540 and/or the usage rate of the memory when a sliding movement event occurs. If the usage rate of the processor 540 and/or the usage rate of the memory increases, the electronic device 200 may control the motor at a second rotational velocity that is greater than the first rotational velocity. According to the above control, as shown in 802 of FIG. 8, the display 530 may move at a second speed corresponding to the second rotational velocity, which is greater than the above-described first speed. Accordingly, the time for completing the sliding-out of the display 530 may be shortened (e.g., shortened to t2, which is less than t3). The electronic device 200 may perform an operation of modifying (e.g., resizing) the content in a cycle corresponding to a configured scan rate (e.g., the same scan rate as the scan rate configured during the operation of controlling the motor at the first rotational velocity) while controlling the motor at the second rotational velocity. However, as the operation of processing the content (e.g., the operation of modifying (e.g., resizing) the content) is delayed due to an increase in the value of the parameter, the content may be displayed on the display 530 of which the size is increased in in a cycle longer than the cycle corresponding to the configured scan rate. However, since the movement speed (e.g., the speed corresponding to the second rotational velocity) of the display 530 is increased by the electronic device 200 so as to correspond to the value (e.g., a second value) of the parameter, the quality (Pqos) of the content display may be guaranteed (or maintained or the difference in quality is less than a preconfigured value) while the display 530 is moving (or while the motor is being controlled) as described in Equation 1 above. Meanwhile, the electronic device 200 may control the motor at a first rotational velocity if the usage rate of the processor 540 and/or the usage rate of the memory is maintained, and control the motor at a second rotational velocity, which is lower than the first rotational velocity, if the usage rate of the processor 540 and/or the usage rate of the memory is reduced.

Meanwhile, although the example in which the display 530 slides out has been described, the operation of the electronic device 200 described above may also be applied to an example in which the display 530 slides in.

In addition, in the case where the movement device of the electronic device 200 is implemented as another device (e.g., a hinge device), instead of the motor, the electronic device 200, not limited to the above, may control the movement speed of the display 530 by another device (e.g., a hinge device) (e.g., control the temperature and/or the amount of power applied to the device), based on the identified value of the parameter.

Hereinafter, an example of the operation of the electronic device 200 according to various embodiments will be described.

According to various embodiments, the electronic device 200 (e.g., the processor 540) may identify a value of a parameter associated with content processing for at least one processor 540 and/or memory, and control the rotational velocity of the motor at a velocity corresponding to the identified value.

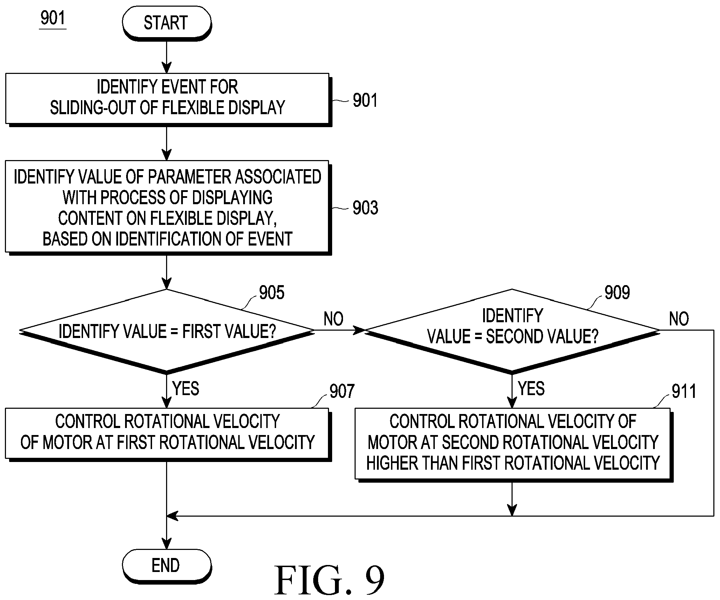

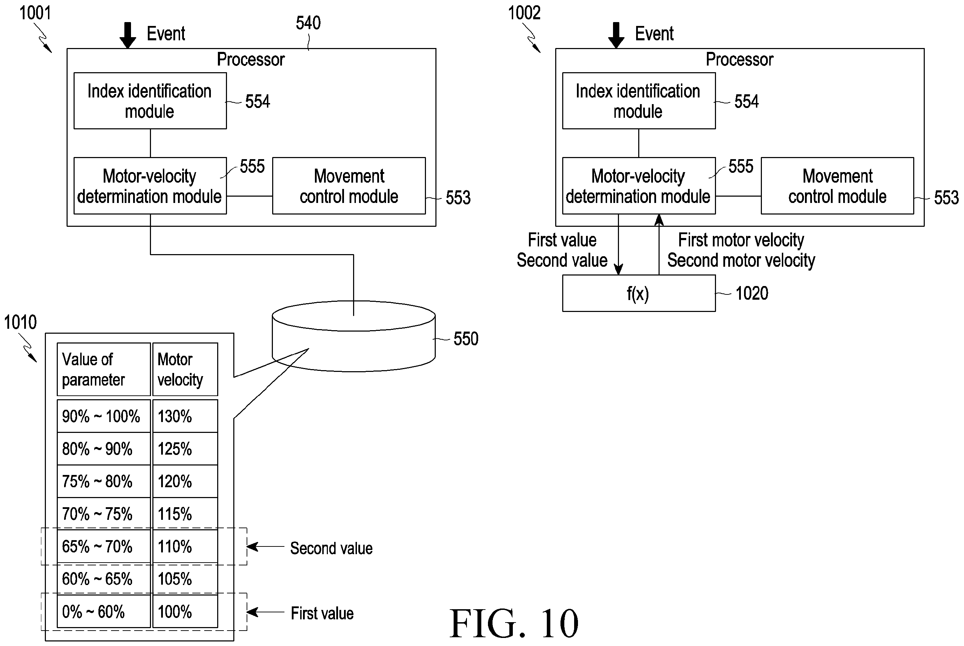

FIG. 9 is a flowchart 900 illustrating an example of the operation of an electronic device 200 according to various embodiments. According to various embodiments, the operations shown in FIG. 9 are not limited to the illustrated sequence and may be performed in various sequences. In addition, according to various embodiments, operations more than the operations shown in FIG. 9 may be performed, or at least one operation fewer than that may be performed. Hereinafter, FIG. 9 will be described with reference to FIG. 10.

FIG. 10 is a diagram illustrating an example of an operation of determining a rotational velocity corresponding to the usage (or usage rate) of a processor 540 and/or memory of an electronic device 200 according to various embodiments.

According to various embodiments, the electronic device 200 may identify an event for sliding-out of the flexible display 530 in operation 901. For example, the electronic device 200 may identify, as the event causing the sliding movement, at least one of identification of execution and/or driving of a specified app and a user input to cause the sliding movement of the flexible display 530 (e.g., identification of selection of an icon or identification of pressing physical keys).

According to various embodiments, the electronic device 200 may identify a value of a parameter associated with a process of displaying content on the flexible display 530, based on the identification of the event, in operation 903. In an embodiment, based on the occurrence of the event, the electronic device 200 may identify at least one of the most recently identified load of the processor 540, usage (or usage rate) of the processor 540, or usage (or usage rate) of the memory 650 (e.g., RAM). The electronic device 200 (e.g., the index identification module 554) may periodically identify values of parameters (e.g., at least one of the load of the processor 540, the usage (or usage rate) of the processor 540, or the usage (or usage rate) of the memory 650 (e.g., RAM)). Based on the identification of the event, the electronic device 200 may identify the most recently identified value of the parameter among the values of the parameters periodically identified. In another embodiment, based on the occurrence of the event, the electronic device 200 may identify at least one of the load of the processor 540, the usage (or usage rate) of the processor 540, or the usage (or usage rate) of the memory 650 at the time at which the event occurs.

According to various embodiments, the electronic device 200 may determine whether or not the identified value corresponds to (or is the same as) a first value in operation 905 and, if the identified value corresponds to the first value, control the rotational velocity of the motor at a first rotational velocity in operation 907. In addition, according to various embodiments, if the identified value is different from the first value, the electronic device 200 may determine whether or not the identified value corresponds to (or is the same as) a second value in operation 909 and, if the identified value corresponds to the second value, control the rotational velocity of the motor at a second rotational velocity in operation 911. For example, the electronic device 200 may determine the rotational velocity of the motor corresponding to the identified value of the parameter, based on information and/or equations prestored in the electronic device 200, and control the motor to rotate at the determined rotational velocity of the motor (e.g., transmit a signal corresponding to the determined rotational velocity to the motor). The electronic device 200 may modify (e.g., resize) content to have a size equal to the changed size of a region of the display 530 exposed to the outside in a cycle corresponding to a configured scan rate while controlling the motor, and display the modified content on the display 530. Alternatively, without being limited to what is described, as described above, the electronic device 200 may obtain content with a changed size output from an application. At this time, the operation of processing the content (e.g., the operation of modifying the content) (or the operation of obtaining content with a changed size from an application) may be delayed according to the values of the parameters (e.g., at least one of the load of the processor 540, the usage (or usage rate) of the processor 540, or the usage (or usage rate) of the memory 650 (e.g., RAM)). Accordingly, the electronic device 200 may perform an operation to determine the rotational velocity of the motor corresponding to the identified value of the parameter, which will be described below in respective embodiments thereof.

In an embodiment, referring to 1001 of FIG. 10, the electronic device 200, based on prestored information 1010 corresponding to the rotational velocity of the motor for each of the values of parameters (e.g., at least one of the load of the processor 540, the usage (or usage rate) of the processor 540, or the usage (or usage rate) of the memory 650 (e.g., RAM)), may identify the rotational velocity (e.g., a first rotational velocity or a second rotational velocity) of the motor corresponding to a currently identified value (e.g., a first value or a second value) of the among the information 1010. As an example, the prestored information 1010 may include information about ranges of values of the parameters (e.g., at least one of the load of the processor 540, the usage (or usage rate) of the processor 540, or the usage (or usage rate) of the memory 650 (e.g., RAM)), which are equal to or greater than a specific value (e.g., 60%), and/or preconfigured increase rates of the motor velocity for the respective values. The information 1010 may be stored in the electronic device 200, based on testing (or experimenting) the degree to which the display of content is delayed due to the processing of content for each parameter value. Based on the test results, a specific value (e.g., 60%) (or threshold value) of a parameter that delays the display of content (or the modification of content) may be measured. In addition, based on the test results, the rotational velocity of the motor may be determined such that the quality (e.g., Pqos) of content display corresponding to the degree of delay identified for each parameter value is maintained at a specific level. For example, referring to the above-mentioned Equation 1, if the time interval for displaying content is increased due to a delay of the content processing (e.g., the operation of obtaining content according to the operation of changing the size of the content) at a specific value (e.g., 60%) of the parameter, the rotational velocity of the motor may be determined to be increased by the amount of time increased to maintain the quality (e.g., Pqos), compared to a preset rotational velocity of the motor. As a result, based on the test results, the electronic device 200 may store information 1010 including a preconfigured rotational velocity of the motor at a specific value (e.g., 60%) of the parameter or less and including rotational velocities of the motor, which are increased from the preconfigured rotational velocity of the motor, for the respective values exceeding the specific value (e.g., 60%). In addition, without being limited to what is described and/or illustrated, the prestored information 1010 may be implemented to include values for motor velocities capable of ensuring the quality of content display for respective sections or values of the parameter, instead of the values increased from the preconfigured motor velocity.

In an embodiment, referring to 1002 of FIG. 10, the electronic device 200, based on a pre-implemented equation 1020, may determine the rotational velocity of the motor (e.g., the first rotational velocity or the second rotational velocity) corresponding to the currently identified value (e.g., the first value or the second value) of the parameter. In Equation 2 above, "a" may be a coefficient for converting the calculated difference of parameter (e.g., the difference between the current value of the parameter and a specific value (e.g., 60%) of the parameter) into units of motor velocity, and the specific value (e.g., 60%) of the parameter may be a value at which the above-described delay of content occurs.

[Equation 2]

$$\textit{Rotational velocity of motor}$$
$$= a \times \textit{(current value of parameter} - \textit{specific value of parameter)}$$
$$\times \textit{preconfigured rotational velocity of motor} + \textit{preconfigured rotational}$$
$$\textit{velocity of motor}$$

In another embodiment, the electronic device 200 may determine the rotational velocity (e.g., the first rotational velocity or the second rotational velocity) of the motor corresponding to the currently identified value (e.g., the first value or the second value) of the parameter, based on an artificial intelligence model (not shown). For example, the artificial intelligence model may be implemented to output the rotational velocity of the motor in response to reception of a value of parameter. Based on the above-described test results, information about the rotational velocities of the motor capable of ensuring the quality of content display for the respective parameter values may be obtained. The artificial intelligence model may be implemented by learning using the values of the parameter as input data and the rotational velocities of the motor capable of ensuring the quality of content display as output data. The artificial intelligence model may be a machine learning model implemented based on machine learning algorithms or a deep learning model implemented based on deep learning algorithms. The machine learning algorithms may include supervised algorithms such as linear regression and logistic regression, unsupervised learning algorithms such as clustering, visualization and dimensionality reduction, and association rule learning, and reinforcement learning algorithms, and the deep learning algorithms may include artificial neural network (ANN), deep neural network (DNN), and convolution neural network (CNN), and, without being limited to what is described, various learning algorithms may be further included. The electronic device 200 may input the currently identified value (e.g., the first value or the second value) of the parameter into the artificial intelligence model and identify the rotational velocity of the motor returned from the artificial intelligence model.

Meanwhile, although the operation of determining the rotational velocity of the motor by the electronic device 200 has been described, the above-described operation may also be applied to the operation of determining the speed of the display 530 rather than the rotational velocity of the motor. For example, the aforementioned information prestored in the electronic device 200 may be implemented to include information about movement velocities of the display 530, instead of the rotational velocities for respective values of the parameter, and/or the above equation may be implemented as an equation for calculating the movement speed of the display 530, instead of the rotational velocity of the motor (e.g., "motor velocity" is replaced with "movement speed of the display 530" in the equation).

Hereinafter, an example of the operation of the electronic device 200 according to various embodiments will be described.

According to various embodiments, if the value of a parameter associated with processing of content is equal to or greater than a specific value (e.g., 60%), the electronic device 200 (e.g., the processor 540) may perform an operation of increasing the rotational velocity of the motor.

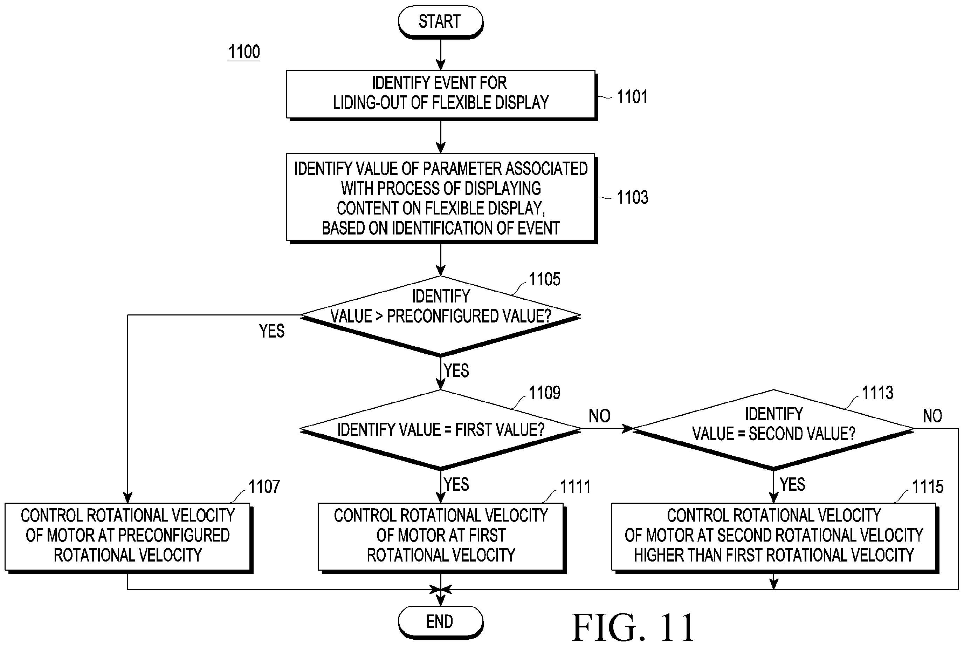

FIG. 11 is a flowchart 1100 illustrating an example of the operation of an electronic device 200 according to various embodiments. According to various embodiments, the operations shown in FIG. 11 are not limited to the illustrated sequence and may be performed in various sequences. In addition, according to various embodiments, operations more than the operations shown in FIG. 11 may be performed, or at least one operation fewer than that may be performed.

According to various embodiments, the electronic device 200 may identify an event for sliding-out of the flexible display 530 in operation 1101. For example, the electronic device 200 may identify, as the event causing the sliding movement, at least one of identification of execution and/or driving of a specified app and a user input to cause the sliding movement of the flexible display 530 (e.g., identification of selection of an icon or identification of pressing physical keys).

According to various embodiments, the electronic device 200 may identify a value of a parameter associated with a process of displaying content on the flexible display 530, based on the identification of the event, in operation 1103. For example, based on the occurrence of the event, the electronic device 200 may identify at least one of the load of the processor 540, the usage (or usage rate) of the processor 540, or the usage (or usage rate) of the memory 650 (e.g., RAM). Operation 1103 of the electronic device 200 may be performed in the same manner as operation 903 of the electronic device 200 described above, so a redundant description thereof will be omitted.

According to various embodiments, the electronic device 200 may determine whether or not the identified value of the parameter is greater than a preconfigured value in operation 1105 and, if it is not greater than (or is less than) the preconfigured value, control the rotational velocity of the motor at a preconfigured rotation velocity in operation 1107. The electronic device 200 may determine whether or not the identified value of the parameter (e.g., at least one of the load of the processor 540, the usage (or usage rate) of the processor 540, or the usage (or usage rate) of the memory 650 (e.g., RAM)) is greater than a preconfigured specific value that delays the operation of processing the content (or causes the content to be displayed at a lower scan rate than a preconfigured scan rate). In an embodiment, the preconfigured specific value may be predetermined based on the above-described test results. In another embodiment, the preconfigured specific value may be a value of the parameter at which the processing operation is identified to be delayed among the operations of identifying whether or not the processing operation of the content is delayed for respective parameter values of the electronic device 200. For example, as at least part of the operation of determining whether or not the processing operation is delayed, the electronic device 200 may compare the difference of time for obtaining content (e.g., obtaining content with a changed size) for respective parameter values (or the time for displaying content) with the cycle corresponding to a preconfigured scan rate and, if the difference of time is greater than the cycle, identify that the operation of processing the content is delayed. If the identified value of the parameter (e.g., at least one of the load of the processor 540, the usage rate (or usage) of the processor 540, or the usage rate (or usage) of the memory 650 (e.g., RAM)) is greater than a preconfigured specific value, the electronic device 200 may control the motor at a preconfigured rotational velocity. Accordingly, the display 530 may be moved at a preconfigured speed.

According to various embodiments, if the identified value of the parameter is greater than the preconfigured value, the electronic device 200 may determine whether or not the identified value of the parameter corresponds to (or is the same as) a first value in operation 1109 and, if the identified value corresponds to the first value, control the rotational velocity of the motor at a first rotational velocity in operation 1111. In addition, according to various embodiments, if the identified value of the parameter is different from the first value, the electronic device 200 may determine whether or not the identified value of the parameter corresponds to (or is the same as) a second value in operation 1113 and, if the identified value corresponds to the second value, control the rotational velocity of the motor at a second rotational velocity in operation 1115. For example, the electronic device 200, based on information and/or equations prestored in the electronic device 200, may determine the rotational velocity of the motor corresponding to the identified value of the parameter and control the motor to rotate at the determined rotational velocity of the motor (e.g., transmit a signal corresponding to the determined rotational velocity to the motor). Operations 1109 to 1113 of the electronic device 200 may be performed in the same manner as operations 905 to 911 of the electronic device 200 described above, so redundant descriptions thereof will be omitted.

Hereinafter, an example of the operation of the electronic device 200 according to various embodiments will be described.

According to various embodiments, the electronic device 200 (e.g., the processor 540) may control the motor at a rotational velocity corresponding to the value of a parameter associated with processing of content and a scan rate thereof.

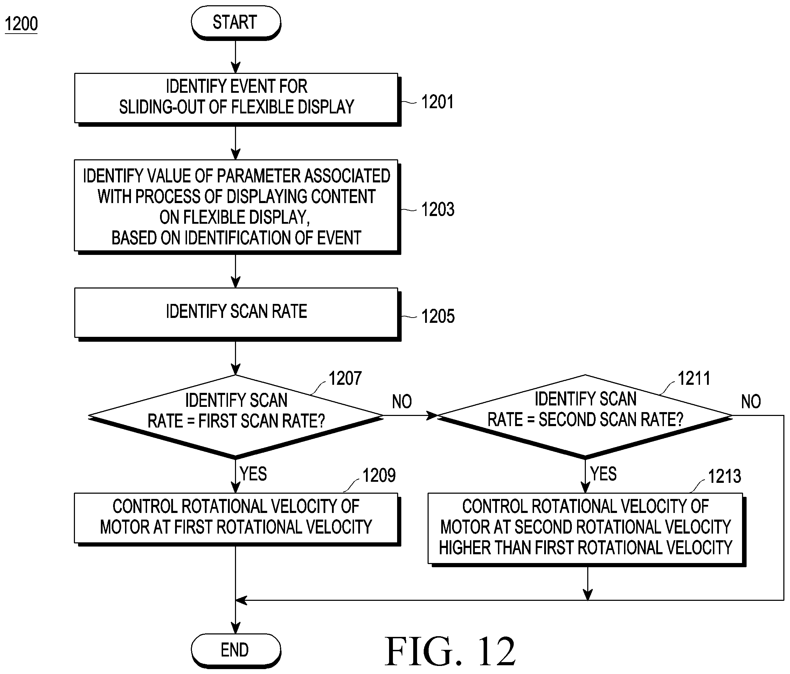

FIG. 12 is a flowchart 1200 illustrating an example of the operation of an electronic device 200 according to various embodiments. According to various embodiments, the operations shown in FIG. 12 are not limited to the illustrated sequence and may be performed in various sequences. In addition, according to various embodiments, operations more than the operations shown in FIG. 12 may be performed, or at least one operation fewer than that may be performed.

According to various embodiments, the electronic device 200 may identify an event for sliding-out of the flexible display 530 in operation 1201. For example, the electronic device 200 may identify, as the event causing the sliding movement, at least one of identification of execution and/or driving of a specified app and a user input to cause the sliding movement of the flexible display 530 (e.g., identification of selection of an icon or identification of pressing physical keys).

According to various embodiments, the electronic device 200 may identify a value of a parameter associated with a process of displaying content on the flexible display 530, based on the identification of the event, in operation 1203. For example, based on the occurrence of the event causing sliding movement, the electronic device 200 may identify at least one of the load of the processor 540, the usage (or usage rate) of the processor 540, or the usage (or usage rate) of the memory 650 (e.g., RAM). Operation 1203 of the electronic device 200 may be performed in the same manner as operation 903 of the electronic device 200 described above, so a redundant description thereof will be omitted.

According to various embodiments, the electronic device 200 may identify a scan rate configured in the electronic device 200 in operation 1205. The electronic device 200 may identify the scan rate currently configured in the electronic device 200, based on the occurrence of the event that causes the sliding movement. For example, the scan rate may indicate the number of pieces of content displayed on the display 530 in unit time (e.g., 1 second). The scan rate may be configured based on the settings of the electronic device 200, settings in the application currently running in the foreground mode, and/or settings of the screen currently being displayed.

According to various embodiments, the electronic device 200 may determine whether or not the identified scan rate corresponds to a first scan rate in operation 1207 and, if the identified scan rate corresponds to the identified first scan rate, control the rotational velocity of the motor at a first rotational velocity corresponding to the identified value of the parameter and the first scan rate in operation 1209. In addition, according to various embodiments, if the identified scan rate does not correspond to the identified first scan rate, the electronic device 200 may determine whether or not the identified scan rate corresponds to a second scan rate in operation 1211 and, if the identified scan rate corresponds to the identified second scan rate, may control the rotational velocity of the motor at a second rotational velocity corresponding to the identified value of the parameter and the second scan rate in operation 1213. For example, the electronic device 200 may determine the rotational velocity of the motor corresponding to the identified value of the parameter and the currently identified scan rate, based on information and/or equations prestored in the electronic device 200, and control the motor to rotate at the determined rotational velocity of the motor (e.g., transmit a signal corresponding to the determined rotational velocity to the motor).

In an embodiment, the electronic device 200, based on information corresponding to the rotational velocities of the motor for respective sections or values of parameters (e.g., at least one of the load of the processor 540, the usage rate (or usage) of the processor 540, or the usage rate (or usage) of the memory 650 (e.g., RAM)) for each of a plurality of scan rates prestored in the electronic device 200, may identify the rotational velocity (e.g., a first rotational velocity or a second rotational velocity) of the motor corresponding to the currently identified value (e.g., a first value or a second value) of the parameter and the currently identified scan rate (e.g., a first scan rate and a second scan rate) from among the information. As an example, each of the plurality of pieces of prestored information may include information 1010 about the rotational velocities of the motor for the respective sections or values of parameters (e.g., at least one of the load of the processor 540, the usage rate (or usage) of the processor 540, or the usage rate (or usage) of the memory 650 (e.g., RAM)) described above in 1001 of FIG. 10. As the scan rate corresponding to each of the plurality of pieces of information increases, a specific value for delaying the display of content may be reduced (i.e., inversely proportional to the scan rate), and the rotational velocity of the motor corresponding to the value of the parameter equal to or greater than a specific value may be higher (i.e. proportional to scan rate). For example, the electronic device 200 may determine the rotational velocity of the motor to be higher as the scan rate increases.

In another embodiment, the electronic device 200, based on a pre-implemented equation 1020 (e.g., Equation 2 described above), may identify the rotational velocity (e.g., the first rotational velocity or the second rotational velocity) of the motor corresponding to the currently identified value (e.g., the first value or the second value) of the parameter and the currently identified scan rate (e.g., the first scan rate and the second scan rate). As at least part of the operation of determining the rotational velocity of the motor based on the pre-implemented equation, the electronic device 200 may apply a specific value corresponding to the currently identified scan rate among specific values of parameters prestored for each of the plurality of scan rates to the above-mentioned Equation 2 and use the same. As described above, as the scan rate increases, the specific value for delaying the display of content may be reduced.

In another embodiment, the electronic device 200, based on a plurality of pre-implemented artificial intelligence models, may identify the rotational velocity (e.g., the first rotational velocity or the second rotational velocity) of the motor corresponding to the currently identified value (e.g., the first value or the second value) of the parameter and the currently identified scan rate (e.g., the first scan rate and the second scan rate). Each of the plurality of artificial intelligence models may be implemented to output rotational velocities of motor in response to reception of parameter values and scan rate values. The artificial intelligence model may be implemented by learning using the values of the parameter and the values of the scan rate as input data, and the rotational velocities of the motor capable of ensuring the quality of content display as output data.

Hereinafter, an example of the operation of the electronic device 200 according to various embodiments will be described.

According to various embodiments, the electronic device 200 (e.g., the processor 540) may control the rotational velocity of the motor at a rotational velocity corresponding to the value of a parameter associated with processing the content and, at the same time, display content in a screen processing method corresponding to the value of the parameter.

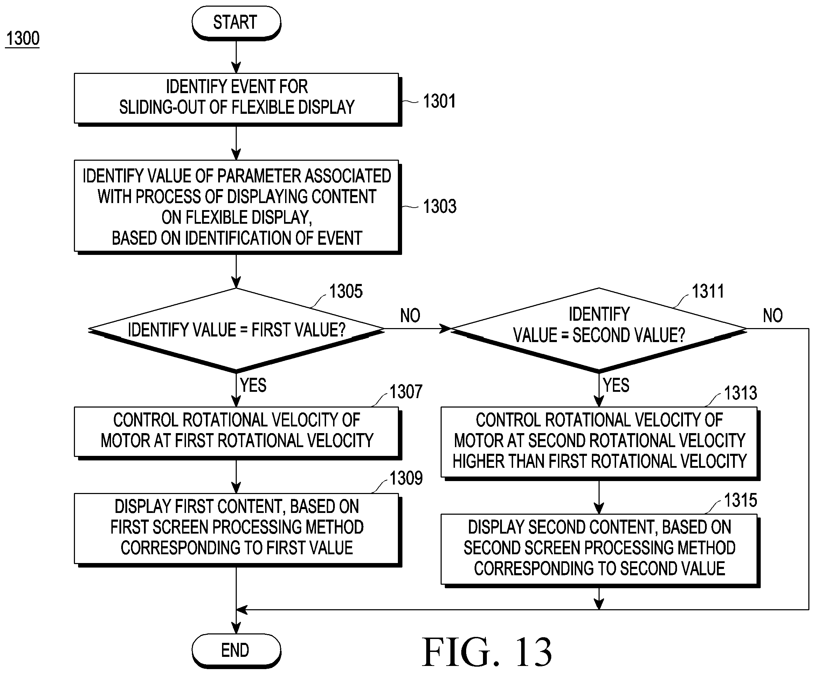

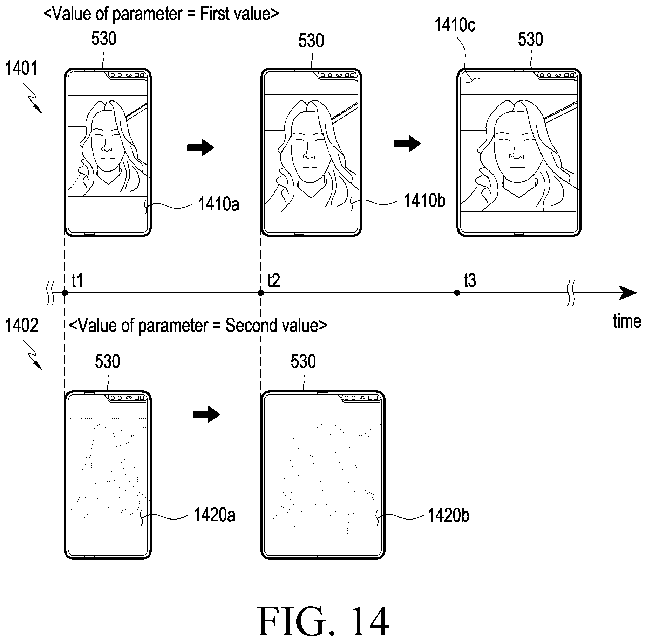

FIG. 13 is a flowchart 1300 illustrating an example of the operation of an electronic device 200 according to various embodiments. According to various embodiments, the operations shown in FIG. 13 are not limited to the illustrated sequence and may be performed in various sequences. In addition, according to various embodiments, operations more than the operations shown in FIG. 13 may be performed, or at least one operation fewer than that may be performed. Hereinafter, FIG. 13 will be described with reference to FIG. 14.

FIG. 14 is a diagram illustrating an example of an operation of controlling a motor and displaying content for each value of a parameter associated with processing content in an electronic device 200 according to various embodiments.

According to various embodiments, the electronic device 200 may identify an event for sliding-out of the flexible display 530 in operation 1301 and, based on the identification of the event, identify a value of a parameter associated with a process of displaying content on the flexible display 530 in operation 1303. For example, the electronic device 200, based on the occurrence of an event that causes the sliding movement (e.g., at least one of identification of execution and/or driving of the specified app, and a user input to cause the sliding movement of the flexible display 530 (e.g., identification of selection of an icon or identification of pressing physical keys)), may identify at least one of the load of the processor 540, the usage rate (or usage) of the processor 540, or the usage rate (or usage) of the memory 650 (e.g., RAM). Operations 1301 to 1303 of the electronic device 200 may be performed in the same manner as operations 901 to 903 of the electronic device 200 described above, so redundant descriptions thereof will be omitted.

According to various embodiments, the electronic device 200 may determine whether or not the identified value of the parameter corresponds to (or is the same as) a first value in operation 1305 and, if the identified value corresponds to the first value, control the rotational velocity of the motor at a first rotational velocity in operation 1307, and may display content, based on a first screen processing method corresponding to the first value in operation 1309. In addition, according to various embodiments, if the identified value of the parameter is different from the first value, the electronic device 200 may determine whether or not the identified value of the parameter corresponds to (or is the same as) a second value in operation 1311 and, if the identified value of the parameter corresponds to the second value, control the rotational velocity of the motor at a second rotational velocity in operation 1313, and may display content, based on a second screen processing method corresponding to the second value in operation 1315. For example, the electronic device 200, based on information and/or equations (e.g., Equation 2 described above) prestored in the electronic device 200, may determine the rotational velocity (e.g., the first rotational velocity or the second rotational velocity) of the motor corresponding to the identified value (e.g., the first value or the second value) of the parameter and control the motor to rotate at the determined rotational velocity of the motor (e.g., transmit a signal corresponding to the determined rotational velocity to the motor). The electronic device 200 may control the motor at a rotational velocity or the motor corresponding to the identified value of the parameter and, at the same time, display content, based on a screen processing method (e.g., the first screen processing method or the second screen processing method) corresponding to the identified value (e.g., the first value or the second value) of the parameter among a plurality of screen processing methods. Hereinafter, the plurality of screen processing methods and an example of an operation of selecting a screen processing method corresponding to a value of a parameter of the electronic device 200 will be described.

According to various embodiments, each of the plurality of screen processing methods may be stored to correspond to a section or value of the parameter, and the plurality of screen processing methods may include screen processing methods that reduce the quality value of content and screen processing methods that maintain and/or increase the quality value of content. The qualities of the content may include at least one of resolution, color reproduction, the number of colors constituting content, or texture, and, not limited to the description, may include various types of visual qualities of content. For example, the screen processing methods that reduce the quality of the content may include at least one of an anti-aliasing processing method, a texture-down processing method, a blur processing method, a resolution-down processing method, and a monochrome processing method. As another example, the screen processing methods that increase the quality of the content may include at least one of a resolution-up processing method based on an artificial intelligence model or a color processing method. As the quality value of content increases, the more processing operations may be performed for displaying the content by the electronic device 200 (e.g., the processor 540), and as the quality value of content decreases, the fewer operations may be performed for displaying the content by the electronic device 200 (e.g., the processor 540). Accordingly, the electronic device 200 may relatively reduce the processing operations of the electronic device for displaying the content using a screen processing method in which the quality of content is reduced as the value of the parameter (e.g., at least one of the load of the processor 540, the usage rate (or usage) of the processor 540, or the usage rate (or usage) of the memory 650 (e.g., RAM)) increases, thereby maintaining the overall load of the electronic device 200, but, if the value of the parameter is small, perform an operation of maintaining and/or increasing the quality of content. For example, referring to information 1010 shown in FIG. 10, a screen processing method in which the quality of content is reduced may correspond to some sections (e.g., a section of 75% to 80% and a section of 80% to 90%) of the parameter, and a screen processing method in which the quality of content is maintained may correspond to some remaining sections (e.g., a section of 70% to 75%, a section of 65% to 70%, a section of 60% to 65%, and a section of 0% to 60%). Accordingly, referring to 1401 of FIG. 14 and 1402 of FIG. 14, the electronic device 200 may display the content using a screen processing method in which the quality of content is highly reduced, while controlling the motor, as the identified value (e.g., the first value or the second value) of the parameter increases. For example, the electronic device 200 may display content 1410a, 1410b, and 1410c of a first quality while controlling the motor at a first rotational velocity corresponding to the first value and display content 1420a and 1420b of a second quality, which is lower than the first quality, while controlling the motor at a second rotational velocity, which is higher than the first rotational velocity, corresponding to the second value.

Meanwhile, according to various embodiments, if the value of the parameter corresponds to the upper limit section (e.g., a section of 90% to 100%), the electronic device 200 may temporarily not display content while controlling the motor.

Hereinafter, an example of the operation of the electronic device 200 according to various embodiments will be described.

According to various embodiments, the electronic device 200 (e.g., the processor 540) may identify a value associated with the quality of display of content and update prestored information for identifying the rotational velocity of the motor, based on the value associated with the identified quality of display of content. As described above in Equation 1, the value associated with the quality of display of content may indicate the quality that the user experiences regarding the display of content while the display 530 is sliding.

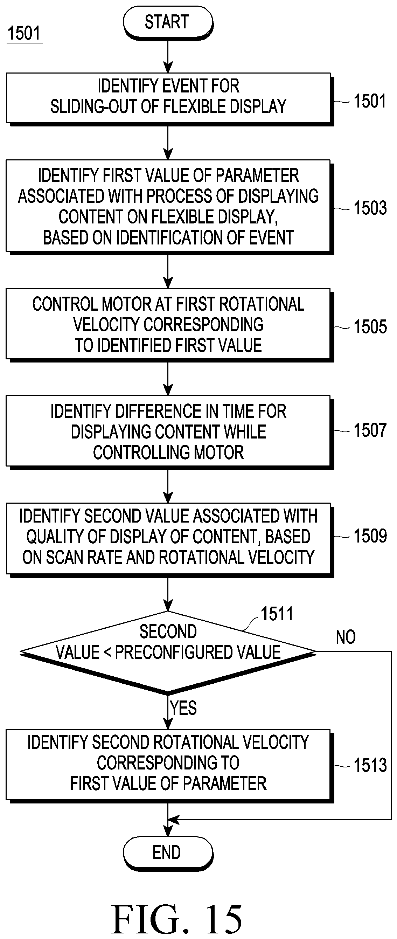

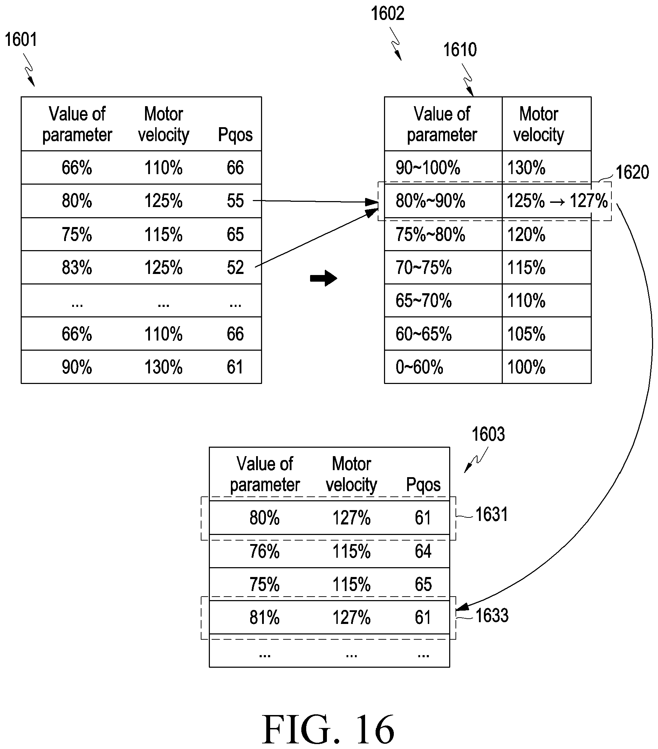

FIG. 15 is a flowchart 1500 illustrating an example of the operation of an electronic device 200 according to various embodiments. According to various embodiments, the operations shown in FIG. 15 are not limited to the illustrated sequence and may be performed in various sequences. In addition, according to various embodiments, operations more than the operations shown in FIG. 15 may be performed, or at least one operation fewer than that may be performed. Hereinafter, FIG. 15 will be described with reference to FIG. 16.

FIG. 16 is a diagram illustrating an example of an operation of updating prestored information in an electronic device 200 according to various embodiments.

According to various embodiments, the electronic device 200 may identify an event for sliding-out of the flexible display 530 in operation 1501 and, based on the identification of the event, identify a first value of a parameter associated with a process of displaying content on the flexible display 530 in operation 1503. For example, the electronic device 200, based on the occurrence of an event that causes the sliding movement (e.g., at least one of identification of execution and/or driving of the specified app, and a user input to cause the sliding movement of the flexible display 530 (e.g., identification of selection of an icon or identification of pressing physical keys)), may identify, as the first value of the parameter, at least one of the load of the processor 540, the usage rate (or usage) of the processor 540, or the usage rate (or usage) of the memory 650 (e.g., RAM). Operations 1501 to 1503 of the electronic device 200 may be performed in the same manner as operations 901 to 903 of the electronic device 200 described above, so redundant descriptions thereof will be omitted.

According to various embodiments, the electronic device 200 may control the motor at a first rotational velocity corresponding to the identified first value in operation 1505. For example, the electronic device 200, based on information and/or equations (e.g., Equation 2 described above) prestored in the electronic device 200, may determine the rotational velocity (e.g., the first rotational velocity) of the motor corresponding to the identified first value (e.g., the first value or the second value) of the parameter and control the motor to rotate at the determined rotational velocity of the motor (e.g., transmit a signal corresponding to the determined rotational velocity to the motor). For example, as shown in 1602 of FIG. 16, the electronic device 200 may identify a first motor velocity (e.g., 125% of a preconfigured motor velocity) corresponding to a section (e.g., 80% to 90%) corresponding to the first value of the parameter from prestored information 1610. The electronic device 200 may modify (e.g., resize) the content to have a size equal to the changed size of a region of the display 530 exposed to the outside in a cycle corresponding to a configured scan rate while controlling the motor at the first motor velocity (e.g., 125% of a preconfigured motor velocity), and display the modified content on the display 530. Operation 1505 of the electronic device 200 may be performed in the same manner as operation 905 of the electronic device 200 described above, so a redundant description thereof will be omitted.

According to various embodiments, the electronic device 200 may identify a difference in time for displaying content while controlling the motor in operation 1507 and, based on the first rotational velocity and the difference in time, identify a second value associated with the quality of display of content in operation 1509. For example, after the operation of controlling the motor is completed, the electronic device 200 may identify the difference in time at which the content is displayed on the display 530 and/or the differences in time at which the processing operation of modifying the content is completed while controlling the motor, as shown in 1601 of FIG. 16. The electronic device 200 may calculate the quality value (e.g., the second value) described above in Equation 1, based on the identified first rotational velocity of the motor and the differences in time.

According to various embodiments, the electronic device 200 may determine whether or not the second value is less than a preconfigured value in operation 1511 and, if the second value is less than the preconfigured value, may identify a second rotational velocity corresponding to the first value of the parameter in operation 1513. For example, if the identified quality value is less than a preconfigured value (e.g., a reference quality value (e.g., 60)) (i.e., if it does not satisfy a reference quality value (e.g., 60)), the electronic device 200 may change (or update) at least some of the prestored information such that the rotational velocity of the motor corresponding to the identified value (e.g., first value) of the parameter is increased until the quality value becomes greater than the preconfigured value. In an embodiment, the electronic device 200 may increase the rotational velocity of the motor corresponding to the prestored first value of the parameter by a specified value, as shown in 1602 of FIG. 16. In another embodiment, the electronic device 200 may reduce a specific value of the parameter that delays processing of content, which corresponds to the prestored first value of the parameter, by a specified value. After changing (or updating) at least some of the prestored information, as described above, the electronic device 200 may calculate the quality value corresponding to the value (e.g., the first value) of the parameter again and, if the quality value is less than the preconfigured value and/or is less than the preconfigured value by a specified value, increase the rotational velocity of the motor by a specified value and/or reduce the specific value identified as delaying the display of content by a specified value. That is, the electronic device 200 may increase the rotational velocity of the motor corresponding to the specific value of the parameter by a specified value and/or reduce the specific value of the parameter by a specified value until the quality value corresponding to the specific value (e.g., first value) of the parameter reaches a preconfigured value or more. Accordingly, as shown in 1603 of FIG. 16, the electronic device 200 may subsequently identify a second rotational velocity (e.g., 127% of a preconfigured motor velocity) higher than the previous rotational velocity (e.g., the first rotational velocity (e.g., 125% of a preconfigured motor velocity), which corresponds to the specific value (e.g., the first value) of the parameter. The second rotational velocity (e.g., 127% of a preconfigured motor velocity) may make it possible that the above-mentioned quality values 1631 and 1633 become a preconfigured value (e.g., 60) or fall within a specified range from the preconfigured value (e.g., 60). As a result, the electronic device 200 may store the second rotational velocity (e.g., 127%) corresponding to the identified first value of the parameter, instead of the first rotational velocity (e.g., 125%), for the section (e.g., 80% to 90%) corresponding to the first value of the parameter of the prestored information 1610.

Meanwhile, according to various embodiments, if a preconfigured quality value is greater than or equal to a preconfigured value, the electronic device 200 may maintain prestored information corresponding to the first value of the parameter.

Hereinafter, an example of the operation of an electronic device 200 according to various embodiments will be described.

According to various embodiments, the electronic device 200 (e.g., the processor 540) may provide a value of a parameter associated with processing the display of content and optimize the provided value, thereby preventing the delay in the processing operation of display of content (e.g., the operation of modifying content).

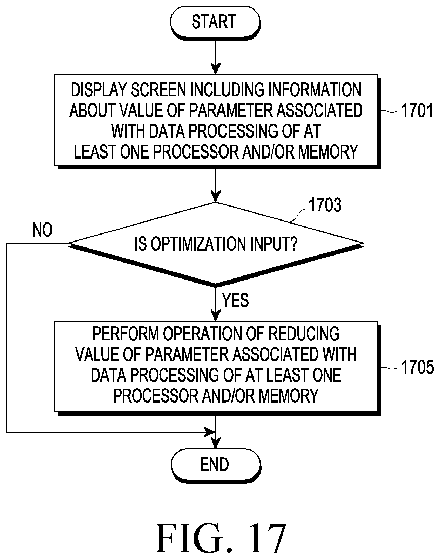

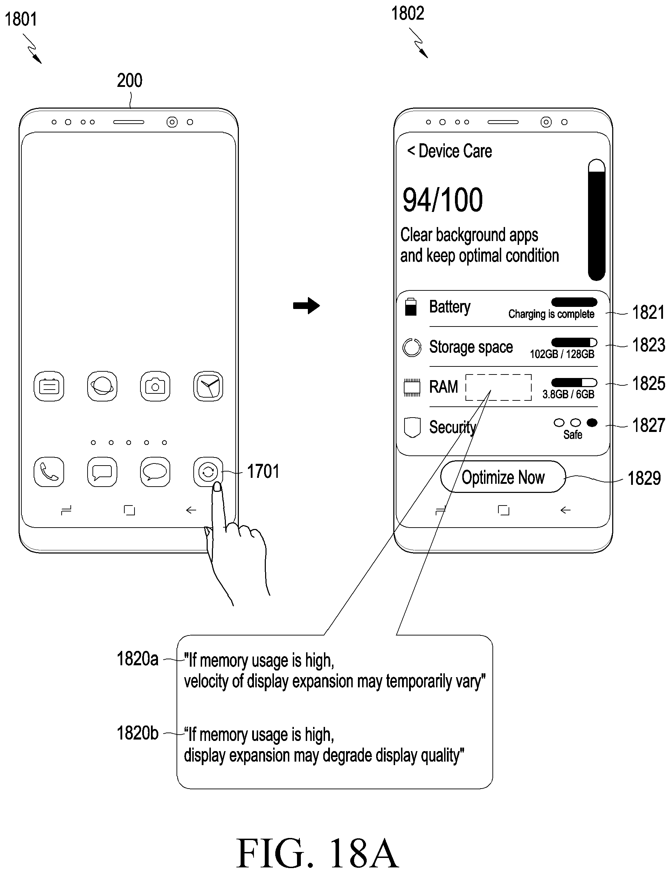

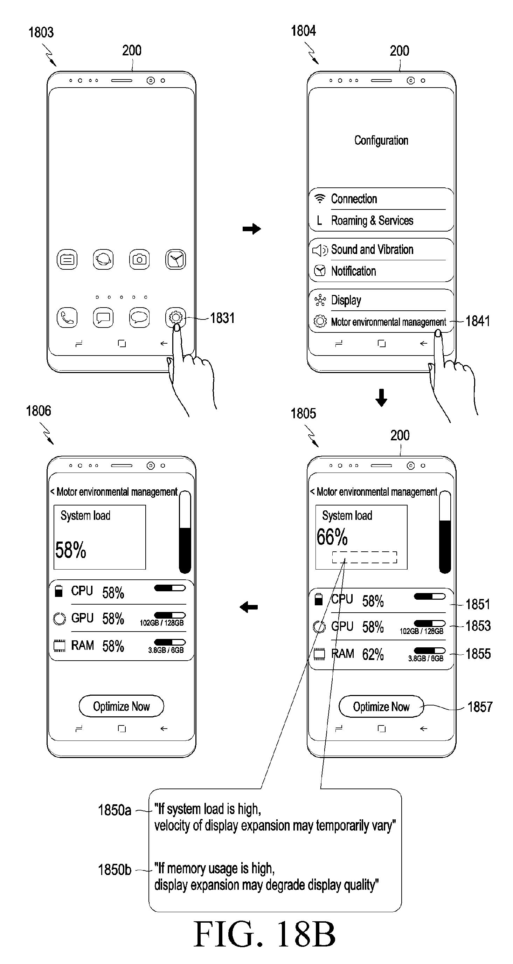

FIG. 17 is a flowchart 1700 illustrating an example of the operation of an electronic device 200 according to various embodiments. According to various embodiments, the operations shown in FIG. 17 are not limited to the illustrated sequence and may be performed in various sequences. In addition, according to various embodiments, operations more than the operations shown in FIG. 17 may be performed, or at least one operation fewer than that may be performed. Hereinafter, FIG. 17 will be described with reference to FIGS. 18A and 18B.

FIG. 18A is a diagram illustrating an example of an operation of providing information on a value of a parameter associated with a process of displaying content of the electronic device 200 and optimizing the value according to various embodiments. FIG. 18B is a diagram illustrating another example of an operation of providing information on a value of a parameter associated with a process of displaying content of the electronic device 200 and optimizing the value according to various embodiments.

According to various embodiments, the electronic device 200 may display a screen including information about a value of a parameter associated with processing content for at least one processor 540 and/or memory in operation 1701. For example, as shown in FIGS. 17A and 17B, the electronic device 200, based on execution of a specific application, may display an execution screen of the specific application including information about a value of a parameter associated with processing the display of content. In an embodiment, referring to 1801 of FIG. 18A, if a menu of a configuration application implemented to optimize the value of the parameter of the electronic device 200 and/or a specific application is executed (e.g., an input for selecting a menu object or an icon 1811 is received), the electronic device 200 may provide a screen including information about the value of the parameter (e.g., at least one of the load of the processor 540, the usage rate (or usage) of the processor 540, or the usage rate (or usage) 1825 of the memory 650 (e.g., RAM)) associated with processing the display of content, other information (e.g., a remaining battery percentage 1821, a usage rate 1823 of a storage space (ROM), and security-related configuration 1827), and an object 1829 that causes an optimization operation. At this time, if the value of the parameter associated with the processing of the display of content is equal to or greater than a specific value (e.g., 60%) that delays the display of content, the electronic device 200 may provide, to the position associated with the value of the parameter, text (or messages or notifications) warning of the value of the parameter (e.g., "If memory usage is high, velocity of display expansion may temporarily vary" 1820a) or text (or messages or notifications) indicating that the value of the parameter is required to be reduced (or optimized) because the display quality may deteriorate due to the value of the parameter (e.g., "If memory usage is high, display expansion may degrade display quality" 1820b). In another embodiment, referring to 1803 to 1804 in FIG. 18B, if a menu 1841 of a configuration application implemented to manage the system load associated with the motor of a configuration app 1831 and/or a specific application is executed (e.g., an input for selecting a menu object 1841 or an icon is received), the electronic device 200 may provide a screen including information about the value of the parameter (e.g., at least one of the load of the processor 540, the usage rate (or usage) 1851 or 1853 of the processor 540, or the usage rate (or usage) 1855 of the memory 650 (e.g., RAM)) associated with processing the display of content and an object 1857 that causes an optimization operation. At this time, in the case of a plurality of parameters 1851, 1853, and 1855, as shown in 1805 of FIG. 18, the average of the values of the respective parameters may be calculated and provided (or displayed) on the screen (e.g., "system load 78%"), but, not limited to what is illustrated and/or described, only the value for each parameter may be provided. At this time, similar to the above description, if the value of the parameter associated with the processing of the display of content is equal to or greater than a specific value (e.g., 60%) that delays the display of content, the electronic device 200 may provide, to the position associated with the value of the parameter, text (or messages or notifications) warning of the value of the parameter (e.g., "If memory usage is high, velocity of display expansion may temporarily vary" 1850a) or text (or messages or notifications) indicating that the value of the parameter is required to be reduced (or optimized) because the display quality may deteriorate due to the value of the parameter (e.g., "If memory usage is high, display expansion may degrade display quality" 1850b).

According to various embodiments, the electronic device 200 may determine whether or not an input for optimization is received in operation 1703 and, if an input for optimization is received, perform an operation of reducing the value of the parameter associated with processing of content for at least one processor 540 and/or memory in operation 1705. For example, the electronic device 200 may perform an optimization operation if an object that causes the optimization operation is selected on the screen. In an embodiment, if an object that causes an optimization operation is selected on the screen shown in 1802 of FIG. 18A, the electronic device 200 may optimize the parameter (e.g., at least one of the load of the processor 540, the usage rate (or usage) of the processor 540, or the usage rate (or usage) of the memory 650 (e.g., RAM)) associated with processing of the display of content and other information (e.g., settings related to security, a battery, and a usage rate of a storage space (ROM)). For example, the electronic device 200 may terminate some of a plurality of processes to reduce the load of the processor 540, the usage rate (or usage) of the processor 540, and/or the usage rate of the memory. In addition, for example, the electronic device 200 may terminate at least some of the applications running in the background mode to reduce the load on the processor 540, the usage rate (or usage) of the processor 540, and/or the usage rate of the memory. Since optimization operations for other parameter values and other information are well-known, detailed descriptions thereof will be omitted. In another embodiment, if the object 1857 that causes an optimization operation is selected on the screen shown in 1805 of FIG. 18B, the electronic device 200 may perform the optimization operation such that a value, which is equal to or greater than a specific value (e.g., 60%), among the values of the parameter (e.g., at least one of the load of the processor 540, the usage rate (or usage) of the processor 540, or the usage rate (or usage) of the memory 650 (e.g., RAM)) associated with processing of the display of content, becomes less than the specific value. The optimization operation may be performed as described above, so a redundant description thereof will be omitted. According to the optimization operation, the electronic device 200 may display an execution screen updated such that the overall system load is reduced (e.g., reduced to 55%), as shown in 1806 of FIG. 18.

According to various embodiments, there may be an electronic device (e.g., the electronic device 210 in FIG. 2) that includes a housing (e.g., the first structure 401 or the second structure 402 in FIGS. 4A to 4C) including a first housing and a second housing configured to slide relative to the first housing, a flexible display (e.g., the display 503 in FIG. 5) configured to slide out, in at least a portion, to an outside of the housing, a motor configured to provide driving force to drive the second housing, memory configured to store executable instructions, and at least one processor configured to access the memory and execute the instructions, wherein the at least one processor is configured to identify an event for sliding-out of the flexible display (e.g., the display 503 in FIG. 5), identify a value of a parameter associated with a process of displaying content on the flexible display (e.g., the display 503 in FIG. 5), based on the identified event, control a rotational velocity of the motor at a first rotational velocity when the identified value is a first value, and control the rotational velocity of the motor at a second rotational velocity higher than the first rotational velocity when the identified value is a second value greater than the first value.

According to various embodiments, there may be an electronic device (e.g., the electronic device 210 in FIG. 2) that further includes memory including at least one RAM may be further included, and the parameter associated with the process of displaying the content may include at least one of a load of the at least one processor, usage of the at least one processor, a usage rate of the at least one processor, usage of the memory, or a usage rate of the memory.

According to various embodiments, there may be an electronic device (e.g., the electronic device 210 in FIG. 2) wherein the at least one processor is configured to determine whether or not the identified value of the parameter is greater than a specific value, and wherein the specific value is a value that causes a delay in the processing of displaying the content when controlling the motor, control the rotational velocity of the motor at a preconfigured rotational velocity when the identified value of the parameter is less than the specific value, and control the rotational velocity of the motor at the first rotational velocity corresponding to the first value or the second rotational velocity corresponding to the second value when the identified value of the parameter is greater than the specific value, and the first rotational velocity and the second rotational velocity may be greater than the preconfigured rotational velocity.

According to various embodiments, there may be an electronic device (e.g., the electronic device 210 in FIG. 2) wherein the at least one processor is configured to identify the first rotational velocity corresponding to the first value or the second rotational velocity corresponding to the second value from among rotational velocities for each of a plurality of values of the parameter, which are prestored in the memory of the electronic device (e.g., the electronic device 210 in FIG. 2).

According to various embodiments, there may be an electronic device (e.g., the electronic device 210 in FIG. 2) further including a display driver IC, wherein the at least one processor is configured to change sizes of a plurality of pieces of first content obtained in a first cycle corresponding to a first scan rate while controlling the rotational velocity of the motor at the first rotational velocity, transmit information about the plurality of pieces of content with the changed sizes to the display driver IC, and wherein the plurality of pieces of content is displayed on the display in the first cycle, change the sizes of a plurality of pieces of second content obtained in the first cycle corresponding to the first scan rate while controlling the rotational velocity of the motor at the second rotational velocity higher than the first rotational velocity, and transmit information about the plurality of pieces of second content with the changed sizes to the display driver IC, and wherein the plurality of pieces of content is displayed on the display in a second cycle longer than the first cycle.

According to various embodiments, there may be an electronic device (e.g., the electronic device 210 in FIG. 2) further including at least one sensor, wherein the at least one processor is configured to identify, using the at least one sensor, a size of a region of the flexible display (e.g., the display 530 in FIG. 5) exposed to the outside in the first cycle and, based on the identified size, change the sizes of the plurality of pieces of first content or the sizes of the plurality of pieces of second content.

According to various embodiments, there may be an electronic device (e.g., the electronic device 210 in FIG. 2), wherein the at least one processor is configured to control the flexible display (e.g., the display 530 in FIG. 5) to display the plurality of pieces of first content based on a first screen processing method, while controlling the motor at the first rotational velocity, and control the flexible display (e.g., the display 530 in FIG. 5) to display the plurality of pieces of second content based on a second screen processing method, while controlling the motor at the second rotational velocity, and wherein a value associated with a quality of the plurality of pieces of second content is lower than a value associated with a quality of the plurality of pieces of first content.

According to various embodiments, there may be an electronic device (e.g., the electronic device 210 in FIG. 2), wherein the at least one processor is configured to reduce a resolution of the plurality of pieces of second content, based on the second screen processing method.

According to various embodiments, there may be an electronic device (e.g., the electronic device 210 in FIG.

2), wherein the at least one processor is configured to identify a configured scan rate, control the rotational velocity of the motor at a third rotational velocity when the identified value is the first value and if the identified scan rate is a first scan rate, and control the rotational velocity of the motor at a fourth rotational velocity higher than the third rotational velocity when the identified value is the first value and when the identified scan rate is a second scan rate higher than the first scan rate.

According to various embodiments, there may be an electronic device (e.g., the electronic device 210 in FIG. 2), wherein the at least one processor is configured to identify first times at which a plurality of pieces of first content is displayed on the flexible display (e.g., the display 530 in FIG. 5) while controlling the motor after the controlling of the motor at the first rotational velocity is completed, identify a quality value associated with the display of the content while controlling the motor, based on at least part of differences between the first rotational velocity and the first times, and wherein the quality value associated with the display of the content indicates user visibility for content displayed on the flexible display while the flexible display is sliding out, and identify a second rotational velocity higher than the first rotational velocity corresponding to the first value when the identified quality value is lower than a preconfigured quality value.

According to various embodiments, there may be an electronic device (e.g., the electronic device 210 in FIG. 2) further including memory and configured change the first rotational velocity corresponding to the first value to the second rotational velocity from among rotational velocities for each of a plurality of values of the parameter, which are prestored in the memory.

According to various embodiments, there may be an electronic device (e.g., the electronic device 210 in FIG. 2), wherein the at least one processor is configured to display, on the flexible display (e.g., the display 530 in FIG. 5), a screen including information about the value of the parameter associated with the process of displaying the content, wherein the screen is configured to include a text for a warning associated with the value of the parameter when the value of the parameter is lower than a specific value, and wherein the specific value is a value that causes a delay in the processing of displaying the content when controlling the motor.

According to various embodiments, there may be an operation method of an electronic device (e.g., the electronic device 210 in FIG. 2) that includes identifying an event for sliding-out of a flexible display (e.g., the display 530 in FIG. 5) of the electronic device, identifying a value of a parameter associated with a process of displaying content on the flexible display (e.g., the display 530 in FIG. 5), based on the identified event, controlling a rotational velocity of the motor at a first rotational velocity when the identified value is a first value, and controlling the rotational velocity of the motor at a second rotational velocity higher than the first rotational velocity when the identified value is a second value greater than the first value.

According to various embodiments, there may be an operation method, wherein the parameter associated with the process of displaying the content includes at least one of a load of at least one processor of the electronic device (e.g., the electronic device 210 in FIG. 2), usage of the at least one processor, a usage rate of the at least one processor, usage of memory of the electronic device (e.g., the electronic device 210 in FIG. 2), or a usage rate of the memory.

According to various embodiments, there may be an operation method that includes determining whether the identified value of the parameter is greater than a specific value , and wherein the specific value is a value that causes a delay in the processing for displaying the content when controlling the motor, controlling the rotational velocity of the motor at a preconfigured rotational velocity when the identified value of the parameter is less than the specific value, and controlling the rotational velocity of the motor at the first rotational velocity corresponding to the first value or the second rotational velocity corresponding to the second value when the identified value of the parameter is greater than the specific value, and wherein the first rotational velocity and the second rotational velocity are greater than the preconfigured rotational velocity.

According to various embodiments, there may be an operation method that includes identifying the first rotational velocity corresponding to the first value or the second rotational velocity corresponding to the second value from among rotational velocities for each of a plurality of values of the parameter, which are prestored in the memory of the electronic device (e.g., the electronic device 210 in FIG. 2).

According to various embodiments, there may be an operation method that includes changing the sizes of a plurality of pieces of first content obtained in a first cycle corresponding to a first scan rate while controlling the rotational velocity of the motor at the first rotational velocity, transmitting information about the plurality of pieces of content with the changed sizes to the display driver IC, and wherein the plurality of pieces of content is displayed on the flexible display in the first cycle, changing the sizes of a plurality of pieces of second content obtained in the first cycle corresponding to the first scan rate while controlling the rotational velocity of the motor at the second rotational velocity higher than the first rotational velocity, and transmitting information about the plurality of pieces of second content with the changed sizes to the display driver IC, and wherein the plurality of pieces of content is displayed on the flexible display in a second cycle longer than the first cycle.

According to various embodiments, there may be an operation method that includes identifying, using at least one sensor of the electronic device (e.g., the electronic device 210 in FIG. 2), a size of a region of the flexible display (e.g., the display 530 in FIG. 5) exposed to the outside in the first cycle, and, based on the identified size, changing the sizes of the plurality of pieces of first content or the sizes of the plurality of pieces of second content.

According to various embodiments, there may be an operation method that includes controlling the flexible display (e.g., the display 530 in FIG. 5) to display the plurality of pieces of first content, while controlling the motor at the first rotational velocity, based on a first screen processing method, and controlling the flexible display (e.g., the display 530 in FIG. 5) to display the plurality of pieces of second content the plurality of pieces of second content, while controlling the motor at the second rotational velocity, based on a second screen processing method, and a value associated with the quality of the plurality of pieces of second content is lower than a value associated with the quality of the plurality of pieces of first content.

According to various embodiments, there may be provided an electronic device (e.g., the electronic device 210 in FIG. 2) that include a housing (e.g., the first structure 401 or the second structure 402 in FIGS. 4A to 4C) including a first housing and a second housing configured to slide relative to the first housing, a flexible display (e.g., the display 530 in FIG. 5) configured to slide out, in at least a portion, to the outside of the housing, motor memory configured to provide driving force to drive the second housing, and at least one processor, wherein the at least one processor is configured identify usage of the memory, control the motor at a first rotational velocity when a value of the identified usage of the memory is a first value, and control the motor at a second rotational velocity greater than the first rotational velocity when a value of the identified usage of the memory is a second value greater than the first value.

**Claims**

1. An electronic device comprising:

   a housing comprising a first housing and a second housing configured to slide relative to the first housing;
   a flexible display configured to slide out, in at least a portion, to an outside of the housing;
   a motor configured to provide driving force to drive the second housing;
   memory configured to store executable instructions; and
   at least one processor configured to access the memory and execute the instructions,
   wherein the at least one processor is configured to:

   identify an event for sliding-out of the flexible display;
   identify a value of a parameter associated with a process of displaying content on the flexible display, based on the identified event;
   control a rotational velocity of the motor at a first rotational velocity when the identified value is a first value; and
   control the rotational velocity of the motor at a second rotational velocity higher than the first rotational velocity when the identified value is a second value greater than the first value.

2. The electronic device according to claim 1, wherein the parameter associated with the process of displaying the content comprises at least one of a load of the at least one processor, usage of the at least one processor, a usage rate of the at least one processor, usage of the memory, or a usage rate of the memory.

3. The electronic device according to claim 1, wherein the at least one processor is configured to:

   determine whether the identified value of the parameter is greater than a specific value, and wherein the specific value is a value that causes a delay in the processing of displaying the content when controlling the motor;
   control the rotational velocity of the motor at a preconfigured rotational velocity when the identified value of the parameter is less than the specific value; and
   control the rotational velocity of the motor at the first rotational velocity corresponding to the first value or the second rotational velocity corresponding to the second value when the identified value of the parameter is greater than the specific value, and
   wherein the first rotational velocity and the second rotational velocity are greater than the preconfigured rotational velocity.

4. The electronic device according to claim 3, wherein the at least one processor is configured to identify the first rotational velocity corresponding to the first value or the second rotational velocity corresponding to the second value from among rotational velocities for each of a plurality of values of the parameter, which are prestored in the memory.

5. The electronic device according to claim 1, further comprising a display driver IC,
   wherein the at least one processor is configured to:

   > change sizes of a plurality of pieces of first content obtained in a first cycle corresponding to a first scan rate while controlling the rotational velocity of the motor at the first rotational velocity, and transmit information about the plurality of pieces of content with the changed sizes to the display driver IC, and wherein the plurality of pieces of content is displayed on the flexible display in the first cycle; and
   > change sizes of a plurality of pieces of second content obtained in the first cycle corresponding to the first scan rate while controlling the rotational velocity of the motor at the second rotational velocity higher than the first rotational velocity, and transmit information about the plurality of pieces of second content with the changed sizes to the display driver IC, and wherein the plurality of pieces of content is displayed on the flexible display in a second cycle longer than the first cycle.

6. The electronic device according to claim 5, further comprising at least one sensor,
   wherein the at least one processor is configured to:

   > identify, using the at least one sensor, a size of a region of the flexible display exposed to the outside in the first cycle; and
   > based on the identified size, change the sizes of the plurality of pieces of first content or the sizes of the plurality of pieces of second content.

7. The electronic device according to claim 5, wherein the at least one processor is configured to:

   > control the flexible display to display the plurality of pieces of first content based on a first screen processing method, while controlling the motor at the first rotational velocity; and
   > control the flexible display to display the plurality of pieces of second content the plurality of pieces of second content based on a second screen processing method, while controlling the motor at the second rotational velocity, and
   > wherein a value associated with a quality of the plurality of pieces of second content is lower than a value associated with a quality of the plurality of pieces of first content.

8. The electronic device according to claim 7, wherein the at least one processor is configured to reduce a resolution of the plurality of pieces of second content, based on the second screen processing method.

9. The electronic device according to claim 1, wherein the at least one processor is configured to:
   identify a configured scan rate;

   > control the rotational velocity of the motor at a third rotational velocity when the identified value is the first value and the identified scan rate is a first scan rate; and
   > control the rotational velocity of the motor at a fourth rotational velocity higher than the third rotational velocity when the identified value is the first value and the identified scan rate is a second scan rate higher than the first scan rate.

10. The electronic device according to claim 1, wherein the at least one processor is configured to:

    > identify first times at which a plurality of pieces of first content is displayed on the flexible display while controlling the motor after the controlling of the motor at the first rotational velocity is completed;
    > identify a quality value associated with the display of the content while controlling the motor, based on at least part of differences between the first rotational velocity and the first times, and wherein the quality value associated with the display of the content indicates user visibility for content displayed on the flexible display while the flexible display is sliding out; and
    > identify a second rotational velocity higher than the first rotational velocity corresponding to the first value when the identified quality value is lower than a preconfigured quality value.

11. The electronic device according to claim 10, configured to change the first rotational velocity corresponding to the first value to the second rotational velocity from among rotational velocities for each of a plurality of values of the parameter, which are prestored in the memory.

**12.** The electronic device according to claim 1, wherein the at least one processor is configured to display, on the flexible display, a screen comprising information about the value of the parameter associated with the process of displaying the content,

wherein the screen is configured to comprise a text for a warning associated with the value of the parameter when the value of the parameter is lower than a specific value, and

wherein the specific value is a value that causes a delay in the processing of displaying the content when controlling the motor.

**13.** An operation method of an electronic device, the method comprising:

identifying an event for sliding-out of a flexible display of the electronic device;

identifying a value of a parameter associated with a process of displaying content on the flexible display, based on the identified event;

controlling a rotational velocity of the motor at a first rotational velocity when the identified value is a first value; and controlling the rotational velocity of the motor at a second rotational velocity higher than the first rotational velocity when the identified value is a second value greater than the first value.

**14.** The operation method according to claim 13, wherein the parameter associated with the process of displaying the content comprises at least one of a load of at least one processor of the electronic device, usage of the at least one processor, a usage rate of the at least one processor, usage of memory of the electronic device, or a usage rate of the memory.

**15.** The operation method according to claim 13, comprising:

determining whether the identified value of the parameter is greater than a specific value, and wherein the specific value is a value that causes a delay in the processing of displaying the content when controlling the motor;

controlling the rotational velocity of the motor at a preconfigured rotational velocity when the identified value of the parameter is less than the specific value; and

controlling the rotational velocity of the motor at the first rotational velocity corresponding to the first value or the second rotational velocity corresponding to the second value when the identified value of the parameter is greater than the specific value,

wherein the first rotational velocity and the second rotational velocity are greater than the preconfigured rotational velocity.

FIG. 1

FIG. 2

FIG. 3A

302

200

311c

103

315c

200

311c

320

320

210 { 311c
      315c

# FIG. 3B

FIG. 3C

EP 4 404 541 A1

EP 4 404 541 A1

FIG. 3D

423b    441   447b      402

423b    423b   445b    441    401   423b   423a-1    423b   441   421b

A1

421b
421a
403

449

403

402    423c    421a

423c

423c    445a    447a    402    423c    402    423c

443

①

# FIG. 4A

FIG. 4B

FIG. 4C

200

Electronic device

540 — Processor

Memory — 550

Modules

510 — Movement device

Display control module — 551

Movement detection module — 552

520 — Display

Movement control module — 553

530 — Sensor

Index identification module — 554

Motor-velocity determination module — 555

FIG. 5

Apps

Processor ~ 540

552 ~ Movement detection module | Display control module ~ 551

Display driver IC ~ 610

Display ~ 530

fps = 60        fps = 60                                      600

611a                611b      611b      611b

t1    t1    t1          t2        t2        time

event

# FIG. 6A

660a

Load of processor,
Usage rate (usage)
of processor

Processor ~ 540

CPU ~ 641

GPU ~ 643

554 ~ Index identification module

660b

Usage rate
(usage)
of memory

RAM ~ 650

555 ~ Motor-velocity determination module

Movement control module ~ 553

Movement device ~ 510

# FIG. 6B

700      ( START )

IDENTIFY VALUE OF PARAMETER ASSOCIATED
WITH DATA PROCESSING OF AT LEAST ONE   — 701
PROCESSOR AND/OR MEMORY

703

CONTROL SLIDING-OUT SPEED AND/OR
SLIDING-IN SPEED OF DISPLAY AT FIRST SPEED

705

IS IDENTIFIED VALUE INCREASED?      NO

YES

CONTROL SLIDING-OUT SPEED AND/OR
SLIDING-IN SPEED OF DISPLAY AT   — 707
SECOND SPEED HIGHER THAN FIRST SPEED

( END )

FIG. 7

<Value of parameter = First value>

801

530    530    530

<Complete expansion>

t1    t2    t3

time

<Value of parameter = Second value>

802    530    530

<Complete expansion>

# FIG. 8

901

START

IDENTIFY EVENT FOR
SLIDING-OUT OF FLEXIBLE DISPLAY — 901

IDENTIFY VALUE OF PARAMETER ASSOCIATED
WITH PROCESS OF DISPLAYING
CONTENT ON FLEXIBLE DISPLAY,
BASED ON IDENTIFICATION OF EVENT — 903

905
IDENTIFY VALUE = FIRST VALUE? —NO→ IDENTIFY VALUE = SECOND VALUE? 909 —NO→

YES 907

CONTROL ROTATIONAL VELOCITY
OF MOTOR AT FIRST ROTATIONAL VELOCITY

YES 911

CONTROL ROTATIONAL VELOCITY OF
MOTOR AT SECOND ROTATIONAL VELOCITY
HIGHER THAN FIRST ROTATIONAL VELOCITY

END

FIG. 9

FIG. 10

EP 4 404 541 A1

1100

START

IDENTIFY EVENT FOR
LIDING-OUT OF FLEXIBLE DISPLAY — 1101

IDENTIFY VALUE OF PARAMETER ASSOCIATED
WITH PROCESS OF DISPLAYING
CONTENT ON FLEXIBLE DISPLAY,
BASED ON IDENTIFICATION OF EVENT — 1103

1105
IDENTIFY
VALUE > PRECONFIGURED VALUE?

YES

YES

1109
IDENTIFY VALUE = FIRST VALUE? — NO

1113
IDENTIFY
VALUE = SECOND VALUE? — NO

YES

YES

1107
CONTROL ROTATIONAL VELOCITY
OF MOTOR AT PRECONFIGURED
ROTATIONAL VELOCITY

1111
CONTROL ROTATIONAL VELOCITY
OF MOTOR AT FIRST
ROTATIONAL VELOCITY

1115
CONTROL ROTATIONAL VELOCITY
OF MOTOR AT SECOND ROTATIONAL VELOCITY
HIGHER THAN FIRST ROTATIONAL VELOCITY

END

FIG. 11

**1200**

```
            ( START )
               │
               ▼
┌──────────────────────────────┐
│      IDENTIFY EVENT FOR       │── 1201
│  SLIDING-OUT OF FLEXIBLE      │
│          DISPLAY              │
└──────────────────────────────┘
               │
               ▼
┌──────────────────────────────┐
│ IDENTIFY VALUE OF PARAMETER   │
│ ASSOCIATED WITH PROCESS OF    │── 1203
│ DISPLAYING CONTENT ON         │
│ FLEXIBLE DISPLAY,             │
│ BASED ON IDENTIFICATION OF    │
│ EVENT                         │
└──────────────────────────────┘
               │
               ▼
┌──────────────────────────────┐
│      IDENTIFY SCAN RATE       │── 1205
└──────────────────────────────┘
               │
               ▼
```

IDENTIFY SCAN RATE = FIRST SCAN RATE? — 1207

NO →

IDENTIFY SCAN RATE = SECOND SCAN RATE? — 1211

YES ↓ 1209

CONTROL ROTATIONAL VELOCITY OF MOTOR AT FIRST ROTATIONAL VELOCITY

YES ↓ 1213

CONTROL ROTATIONAL VELOCITY OF MOTOR AT SECOND ROTATIONAL VELOCITY HIGHER THAN FIRST ROTATIONAL VELOCITY

NO →

( END )

# FIG. 12

EP 4 404 541 A1

FIG. 13

1300

START

IDENTIFY EVENT FOR
SLIDING-OUT OF FLEXIBLE DISPLAY — 1301

IDENTIFY VALUE OF PARAMETER ASSOCIATED
WITH PROCESS OF DISPLAYING CONTENT
ON FLEXIBLE DISPLAY,
BASED ON IDENTIFICATION OF EVENT — 1303

1305 IDENTIFY VALUE = FIRST VALUE? — NO → 1311 IDENTIFY VALUE = SECOND VALUE? — NO

YES

1307 CONTROL ROTATIONAL VELOCITY OF
MOTOR AT FIRST ROTATIONAL VELOCITY

YES

1313 CONTROL ROTATIONAL VELOCITY OF
MOTOR AT SECOND ROTATIONAL VELOCITY
HIGHER THAN FIRST ROTATIONAL VELOCITY

1309 DISPLAY FIRST CONTENT, BASED ON
FIRST SCREEN PROCESSING METHOD
CORRESPONDING TO FIRST VALUE

1315 DISPLAY SECOND CONTENT, BASED ON
SECOND SCREEN PROCESSING METHOD
CORRESPONDING TO SECOND VALUE

END

<Value of parameter = First value>

<Value of parameter = Second value>

## FIG. 14

START

1501

IDENTIFY EVENT FOR
SLIDING-OUT OF FLEXIBLE DISPLAY — 1501

IDENTIFY FIRST VALUE OF PARAMETER
ASSOCIATED WITH PROCESS OF DISPLAYING
CONTENT ON FLEXIBLE DISPLAY,
BASED ON IDENTIFICATION OF EVENT — 1503

CONTROL MOTOR AT FIRST ROTATIONAL
VELOCITY CORRESPONDING
TO IDENTIFIED FIRST VALUE — 1505

IDENTIFY DIFFERENCE IN TIME FOR
DISPLAYING CONTENT WHILE
CONTROLLING MOTOR — 1507

IDENTIFY SECOND VALUE ASSOCIATED WITH
QUALITY OF DISPLAY OF CONTENT, BASED
ON SCAN RATE AND ROTATIONAL VELOCITY — 1509

SECOND
VALUE < PRECONFIGURED VALUE — 1511   NO

YES

IDENTIFY SECOND ROTATIONAL VELOCITY
CORRESPONDING TO
FIRST VALUE OF PARAMETER — 1513

END

FIG. 15

1601

| Value of parameter | Motor velocity | Pqos |
|---|---|---|
| 66% | 110% | 66 |
| 80% | 125% | 55 |
| 75% | 115% | 65 |
| 83% | 125% | 52 |
| ... | ... | ... |
| 66% | 110% | 66 |
| 90% | 130% | 61 |

1602

1610

| Value of parameter | Motor velocity |
|---|---|
| 90~100% | 130% |
| 80%~90% | 125% → 127% |
| 75%~80% | 120% |
| 70~75% | 115% |
| 65~70% | 110% |
| 60~65% | 105% |
| 0~60% | 100% |

1620

1603

| Value of parameter | Motor velocity | Pqos |
|---|---|---|
| 80% | 127% | 61 |
| 76% | 115% | 64 |
| 75% | 115% | 65 |
| 81% | 127% | 61 |
| ... | ... | ... |

1631

1633

# FIG. 16

FIG. 17

1801

1802

200

→

< Device Care

## 94/100

Clear background apps
and keep optimal condition

| Battery | Charging is complete | — 1821 |
| Storage space | 102GB / 128GB | — 1823 |
| RAM | 3.8GB / 6GB | — 1825 |
| Security | Safe | — 1827 |

Optimize Now — 1829

— 1701

1820a — "If memory usage is high,
velocity of display expansion may temporarily vary"

1820b — "If memory usage is high,
display expansion may degrade display quality"

# FIG. 18A

FIG. 18B

## INTERNATIONAL SEARCH REPORT

| International application No. |
|---|
| **PCT/KR2022/015560** |

**A.     CLASSIFICATION OF SUBJECT MATTER**

**H04M 1/02**(2006.01)i; **G06F 1/16**(2006.01)i

According to International Patent Classification (IPC) or to both national classification and IPC

**B.     FIELDS SEARCHED**

Minimum documentation searched (classification system followed by classification symbols)

H04M 1/02(2006.01); G02F 1/1333(2006.01); G06F 1/16(2006.01); G06F 3/041(2006.01); G06F 3/048(2006.01); G06F 3/0485(2013.01); G06F 3/147(2006.01); G09F 9/30(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 플렉서블(flexible), 디스플레이(display), 이벤트(event), 컨텐트(content), 모터 (motor), 속도(speed)

**C.     DOCUMENTS CONSIDERED TO BE RELEVANT**

| Category* | Citation of document, with indication, where appropriate, of the relevant passages | Relevant to claim No. |
|---|---|---|
| X | WO 2021-085658 A1 (LG ELECTRONICS INC.) 06 May 2021 (2021-05-06)<br>See paragraphs [0056]-[0255] and figures 5-8. | 1-4,9-15 |
| Y | | 5-8 |
| Y | KR 10-2016-0123201 A (SAMSUNG ELECTRONICS CO., LTD.) 25 October 2016 (2016-10-25)<br>See paragraph [0048]. | 5-8 |
| A | KR 10-2016-0123620 A (SAMSUNG ELECTRONICS CO., LTD.) 26 October 2016 (2016-10-26)<br>See paragraphs [0032]-[0040] and figure 1. | 1-15 |
| A | KR 10-2017-0122313 A (SAMSUNG DISPLAY CO., LTD.) 06 November 2017 (2017-11-06)<br>See paragraphs [0032]-[0048] and figures 1-3. | 1-15 |
| A | US 2019-0042014 A1 (NTT DOCOMO, INC.) 07 February 2019 (2019-02-07)<br>See paragraphs [0050]-[0052] and figures 6-7. | 1-15 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 January 2023** | **18 January 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| | | International application No. |
|---|---|---|
| | | **PCT/KR2022/015560** |

| Patent document cited in search report | | | Publication date (day/month/year) | Patent family member(s) | | | Publication date (day/month/year) |
|---|---|---|---|---|---|---|---|
| WO | 2021-085658 | A1 | 06 May 2021 | KR | 10-2022-0084318 | A | 21 June 2022 |
| KR | 10-2016-0123201 | A | 25 October 2016 | KR | 10-2407596 | B1 | 10 June 2022 |
| | | | | US | 10937393 | B2 | 02 March 2021 |
| | | | | US | 11355091 | B2 | 07 June 2022 |
| | | | | US | 2016-0307545 | A1 | 20 October 2016 |
| | | | | US | 2021-0158783 | A1 | 27 May 2021 |
| KR | 10-2016-0123620 | A | 26 October 2016 | CN | 107430482 | A | 01 December 2017 |
| | | | | CN | 107430482 | B | 02 February 2021 |
| | | | | CN | 112748821 | A | 04 May 2021 |
| | | | | EP | 3284081 | A1 | 21 February 2018 |
| | | | | EP | 4047588 | A1 | 24 August 2022 |
| | | | | KR | 10-2420043 | B1 | 13 July 2022 |
| | | | | US | 10216398 | B2 | 26 February 2019 |
| | | | | US | 11137890 | B2 | 05 October 2021 |
| | | | | US | 2016-0306534 | A1 | 20 October 2016 |
| | | | | US | 2019-0155492 | A1 | 23 May 2019 |
| | | | | US | 2021-0390893 | A1 | 16 December 2021 |
| | | | | WO | 2016-167503 | A1 | 20 October 2016 |
| KR | 10-2017-0122313 | A | 06 November 2017 | CN | 107316605 | A | 03 November 2017 |
| | | | | CN | 107316605 | B | 01 February 2022 |
| | | | | KR | 10-2482330 | B1 | 29 December 2022 |
| | | | | US | 10365690 | B2 | 30 July 2019 |
| | | | | US | 10691174 | B2 | 23 June 2020 |
| | | | | US | 10969830 | B2 | 06 April 2021 |
| | | | | US | 2017-0309226 | A1 | 26 October 2017 |
| | | | | US | 2019-0302851 | A1 | 03 October 2019 |
| | | | | US | 2020-0301476 | A1 | 24 September 2020 |
| US | 2019-0042014 | A1 | 07 February 2019 | EP | 3401898 | A1 | 14 November 2018 |
| | | | | EP | 3401898 | B1 | 20 April 2022 |
| | | | | JP | 6694450 | B2 | 13 May 2020 |
| | | | | WO | 2017-134890 | A1 | 10 August 2017 |

Form PCT/ISA/210 (patent family annex) (July 2022)